# EUROPEAN PATENT APPLICATION

(11) **EP 4 804 034 A1**
(43) Date of publication of application: **09.09.2026**
(21) Application number: 25222399.5
(22) Date of filing: 10.12.2025
(51) Int. Cl.: G06F 12/02, G06F 30/343, H10W 90/20, H10W 90/10, G06F 30/347

(54) **CHIPLET SYSTEM WITH RECONFIGURABLE LOGICAL MEMORY MACROS**

(30) Priority: 03.03.2025 US 202563765828 P
(71) Applicant: Chipletti Ltd, Cambridge Cambridgeshire CB1 9BJ (GB)
(72) Inventor: JOHAR, Kauser Yakub, Cambridge, CB1 9BJ (GB)
(74) Representative: EIP

(57) **Abstract**

A system comprises a compute chiplet, one or more memory chiplets, and a physical interface coupling the memory chiplets to the compute chiplet. Each memory chiplet includes a plurality of physical memory macros, each having a physical width and a physical depth, and a bus coupled to the physical memory macros. The system further comprises a memory controller configured to define one or more logical memory macros, each having a logical width and a logical depth which may be different to the physical width or physical depth of the physical memory macros. Each logical memory macro includes memory cells from one or more physical memory macros. The memory controller is configured to control access to the logical memory macros by the compute chiplet. The memory controller may translate logical memory macro addresses into physical memory macro addresses for write and read operations.

## Description

### Technical Field

The present disclosure relates to memory systems and chiplet architectures. More particularly, the disclosure relates to systems and methods for configuring and accessing memory in chiplet-based computing systems, including memory controllers that enable flexible memory organization through logical memory macros.

### Background

Multi-chiplet semiconductor systems have become increasingly prevalent in modem computing architectures. These systems integrate multiple discrete semiconductor dies, or chiplets, within a single package to achieve desired functionality. Chiplet-based designs offer advantages in system integration, including the ability to combine dies manufactured using different process technologies and the potential for cost reduction through reuse of proven chiplet designs. In these systems, compute chiplets perform processing operations while memory chiplets provide data storage capabilities. The distribution of functionality across multiple chiplets introduces complexities in resource management, particularly regarding how memory resources are allocated and accessed by processing elements distributed across different dies.

### Summary

A system comprises a compute chiplet and one or more memory chiplets. Each memory chiplet comprises a plurality of physical memory macros, each comprising a plurality of memory cells and having a physical width and a physical depth, and a bus coupled to each of the plurality of physical memory macros. A physical interface is configured to couple the one or more memory chiplets to the compute chiplet. The system further comprises a memory controller configured to define one or more logical memory macros, each having a logical width and a logical depth which may be different to the physical width or the physical depth of the physical memory macros, and each logical memory macro including memory cells from one or more physical memory macros. The memory controller is further configured to control access to the one or more logical memory macros by the compute chiplet.

The one or more memory chiplets may be SRAM memory chiplets, the physical memory macros may be physical SRAM memory macros, and the memory controller may be an SRAM memory controller.

Each physical memory macro may include a plurality of rows of memory cells, defining the macro depth, and a plurality of columns of memory cells, defining the macro width. Each physical memory macro may also include a row decoder; and a column decoder.

A memory chiplet comprises a plurality of physical memory macros, each comprising a plurality of memory cells and having a physical width and a physical depth, a physical interface configured to allow the memory chiplet to physically couple to and communicate with a compute chiplet, and a bus coupled to each of the plurality of physical memory macros. The plurality of physical memory macros may be reconfigured into one or more logical memory macros, each logical memory macro having a logical width and a logical depth which may be different to the physical width or the physical depth of the physical memory macros, and each logical memory macro including memory cells from one or more physical memory macros.

The memory chiplet may further comprise a memory-side memory controller configured to translate requests for access to a logical memory location to a request to access a physical memory location.

A compute chiplet comprises one or more compute processor cores, a physical interface for coupling the compute chiplet to a memory chiplet, and a compute-side memory controller. The compute-side memory controller is configured to control access to the memory chiplet, the memory chiplet having a plurality of physical memory macros each comprising a plurality of memory cells and having a physical width and a physical depth, and define one or more logical memory macros, each having a logical width and a logical depth which may be different to the physical width or the physical depth of the physical memory macros, and each logical memory macro including memory cells from one or more physical memory macros.

The compute-side memory controller may comprise a logical memory macro size register, configured to store the size of a defined logical memory macro.

A memory controller for a chiplet system is configured to control access to a memory chiplet by a compute chiplet, the memory chiplet having a plurality of physical memory macros each comprising a plurality of memory cells and having a physical width and a physical depth, and define one or more logical memory macros, each having a logical width and a logical depth which may be different to the physical width or the physical depth of the physical memory macros, and each logical memory macro including memory cells from one or more physical memory macros.

A method of establishing a logical memory macro in a memory chiplet comprises receiving, at a memory controller, a request from a compute chiplet for one or more memory macros, each having a width and a depth, in the memory chiplet, wherein the memory chiplet comprises a plurality of physical memory macros, each comprising a plurality of memory cells and having a physical width and a physical depth. The method further comprises defining, at the memory controller, one or more logical memory macros in response to the request, the one or more logical memory macros having a logical width and a logical depth corresponding to the requested width and depth, wherein the logical width and logical depth may be different to the physical width or the physical depth of the physical memory macros, and each logical memory macro including memory cells from one or more physical memory macros.

A method of controlling access to a memory chiplet comprises receiving, at a memory controller, a write/read request from a compute chiplet, the write/read request including a logical memory macro address, translating, at the memory controller, the logical memory macro address into one or more physical memory macro addresses, and write/read data to the one or more physical memory macro addresses in one or more physical memory macros in the memory chiplet.

A computer program comprises instructions which, when the program is executed by a computer, cause the computer to carry out the method of establishing a logical memory macro in a memory chiplet or the method of controlling access to a memory chiplet.

A computer-readable medium comprises instructions which, when executed by a computer, cause the computer to carry out the method of establishing a logical memory macro in a memory chiplet or the method of controlling access to a memory chiplet.

The medium may be a non-transitory medium.

### Brief Description of the Figures

Examples of the present disclosure will now be described with reference to the accompanying drawings:
Figure 1 is a cross-sectional view showing a multi-chiplet package system with stacked memory chiplets;
Figure 2 is a plan view showing a memory chiplet with physical memory macros and a memory controller;
Figure 3 is a schematic diagram showing the internal structure of a physical memory macro from Figure 2;
Figure 4 is a schematic diagram showing the internal architecture of the compute chiplet from Figure 1;
Figure 5 is a schematic diagram showing logical memory macros overlaid on the physical memory macros of the memory chiplet from Figure 2;
Figure 6 is a schematic diagram showing the arrangement of through silicon vias forming the physical interface between the memory chiplet and compute chiplet of Figures 2 and 4;
Figure 7 is a schematic diagram showing a compute-side memory controller with configuration registers;
Figure 8 is a flow diagram showing a method of establishing a logical memory macro in a memory chiplet;
Figure 9 is a flow diagram showing a method of controlling access to a memory chiplet through address translation at a memory controller;
Figure 10 is a schematic diagram showing a logical memory macro formed by horizontally arranging eight physical memory macros;
Figure 11 is a timing diagram showing write and read operations across the compute to memory controller interface, physical interface, and memory controller to physical memory macro interface;
Figure 12 is a schematic diagram showing a logical memory macro formed by vertically arranging eight physical memory macros;
Figure 13 is a timing diagram showing write and read operations to two different physical memory macros at the same physical address offset;
Figure 14 is a schematic diagram showing three logical memory macros of different dimensions formed from a shared set of physical memory macros; and
Figure 15 is a timing diagram showing simultaneous read operations across multiple logical memory interfaces with different configured widths.

### Detailed Description

### System-in-Package Architecture

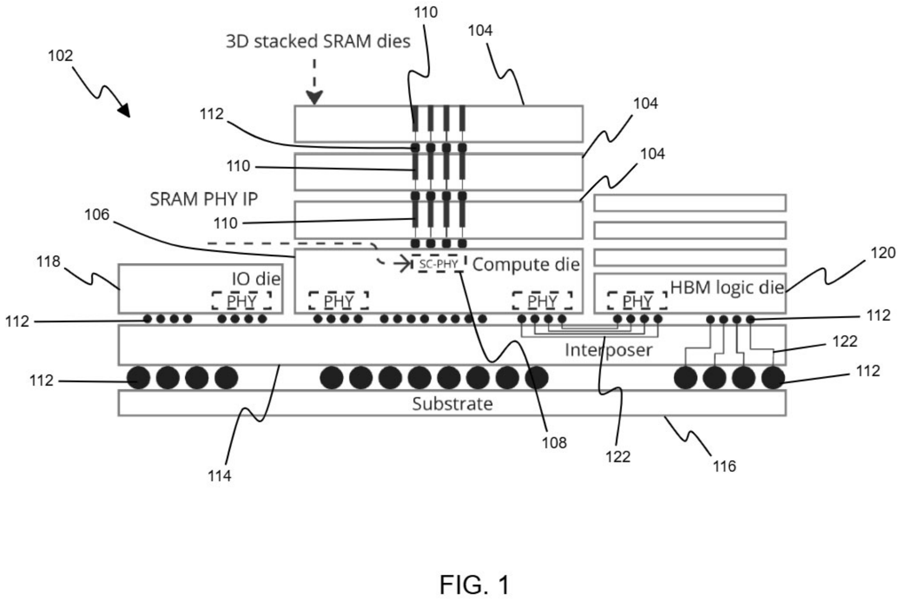

Figure 1 shows a cross-sectional view of system 102, which may be configured as a system-in-package (SiP). In contrast to a system-on-chip where all functional blocks reside on a single semiconductor die, system 102 comprises multiple independently manufactured chiplets that are packaged together to form a complete computing system.

System 102 comprises compute chiplet 106. While one compute chiplet 106 is shown, multiple compute chiplets may be included in other configurations. Compute chiplet 106 contains processing logic, which may include digital circuits, analog circuits, or a combination thereof. The processing logic may comprise one or more of a central processing unit (CPU), graphics processing unit (GPU), neural processing unit (NPU), or other specialized processing elements.

System 102 further comprises one or more memory chiplets 104. The memory chiplets 104 are vertically stacked above compute chiplet 106 in the configuration shown. Each memory chiplet 104 comprises a plurality of physical memory macros. In some examples, the memory chiplets 104 may be SRAM memory chiplets, though other memory technologies may be used. While multiple memory chiplets 104 are shown stacked vertically, a single memory chiplet 104 may be used in some configurations. The use of multiple stacked memory chiplets 104 provides increased memory capacity and bandwidth, and communication latencies below 10 nanoseconds compared to tens of nanoseconds for two-dimensional connections. These reduced latencies make memory chiplets 104 viable for applications requiring ultra-low latency and high-speed memory access.

Physical interface 108 couples the one or more memory chiplets 104 to compute chiplet 106. Physical interface 108 includes components on both the compute chiplet side and the memory chiplet side to enable communication between the chiplets. Physical interface 108 provides electrical connections for power, ground, clock signals, control signals, and data transfer between compute chiplet 106 and memory chiplets 104.

Plurality of through silicon vias (TSVs) 110 enable vertical stacking of memory chiplets 104. TSVs 110 are vertical electrical connections that pass completely through the silicon die of each chiplet. Because TSVs 110 pass vertically through each chiplet, the physical connections are substantially the same on the top and bottom surfaces of each chiplet. This symmetry facilitates stacking of multiple memory chiplets 104, as the same connection pattern can be repeated at each level of the stack.

Solder bumps 112 provide electrical and mechanical connections between different components in system 102. Solder bumps 112 connect TSVs 110 between adjacent memory chiplets 104 in the vertical stack. Solder bumps 112 also connect the lowest level of TSVs110 in compute chiplet 106 to interposer 114. Additionally, solder bumps 112couple IO die 118 and high bandwidth memory (HBM) logic die 120 to compute chiplet 106, and couple interposer 114 to system substrate 116.

The compute chiplet 106 and the memory chiplets 104 may be attached using alternatives to solder bumps 112. For example, the dies may be directly bonded using hybrid bonding, in which the TSVs of each die are directly bonded together. Alternatively, the solder bumps may be replaced with copper pillars or other elements that provide the necessary electrical and mechanical coupling.

Interposer 114 provides a platform on which compute chiplet 106 is mounted. Interposer 114 may include interposer routing 122, which provides electrical connections between different chiplets placed on the interposer surface. In the configuration shown, compute chiplet 106 is supported on interposer 114, and memory chiplets 104 are supported on compute chiplet 106. In some configurations, interposer 114 may be omitted, with compute chiplet 106 or one of the memory chiplets 104 serving as the structural support for other chiplets. Alternatively, the memory chiplets 104 may be stacked underneath compute chiplet 106 rather than above it, which may provide thermal management benefits by allowing heat dissipation from the top surface of compute chiplet 106.

System substrate 116 provides mechanical support and electrical connections for the entire system 102. System substrate 116 may be a printed circuit board (PCB) or other suitable substrate material. Solder bumps 112 couple interposer 114 to system substrate 116, providing both mechanical attachment and electrical connectivity to external systems. Each chiplet in system 102 has its own local substrate, which is distinct from system substrate 116.

IO die 118 and HBM logic die 120 are shown coupled to compute chiplet 106 via physical interfaces (PHY) and solder bumps 112. IO die 118 provides input/output functionality for communicating with external devices and systems. HBM logic die 120 provides control and interface logic for high bandwidth memory. These components are placed on interposer 114 in a two-dimensional arrangement alongside compute chiplet 106. The physical interfaces between chiplets in the two-dimensional plane differ in design and signal range from the vertical physical interfaces used for the three-dimensional stacking of memory chiplets 104.

System 102 demonstrates a heterogeneous integration approach where different chiplets may be manufactured using different semiconductor process nodes optimized for their respective functions, then packaged together. This contrasts with traditional system-on-chip designs where all components must be fabricated using the same process node. The vertical stacking of memory chiplets 104 above compute chiplet 106 enables low-latency, high-bandwidth communication between the processing logic and memory, with communication latencies that can be reduced to below 10 nanoseconds through the use of TSVs 110.

Memory chiplets 104 may be manufactured using a semiconductor process node different from that used for compute chiplet 106. In one example, the memory chiplets 104 are SRAM (static random-access memory) chiplets. SRAM scaling becomes increasingly challenging at advanced process nodes, where reduced cell sizes can compromise reliability and increase leakage current. By fabricating memory chiplets 104 on a more mature process node while using an advanced node for compute chiplet 106, system 102 achieves both high processing performance and reliable memory operation.

Memory chiplets 104 may be planar, with each having an upper side and a lower side. Physical interface 108 includes connections on the upper side and on the lower side of memory chiplets 104. Providing connections on both upper and lower sides enables flexible stacking configurations where memory chiplets 104 can be positioned above or below compute chiplet 106. This bidirectional connectivity facilitates optimal thermal management by allowing heat dissipation from the exposed surface of compute chiplet 106. The identical layout of connections on upper and lower sides enables memory chiplets 104 to be stacked in different positions or orientations while maintaining proper connectivity.

In an alternative configuration, memory chiplets 104 and compute chiplet 106 may be arranged horizontally adjacent to each other. In this horizontal arrangement, chiplets are positioned on the same plane, such as on interposer 114. Physical interface 108 in a horizontal arrangement includes lateral connections across the surface of interposer 114 rather than vertical connections through TSVs 110. The horizontal arrangement may provide advantages for certain thermal management strategies or when vertical stacking is not feasible.

### Memory Chiplet Internal Architecture

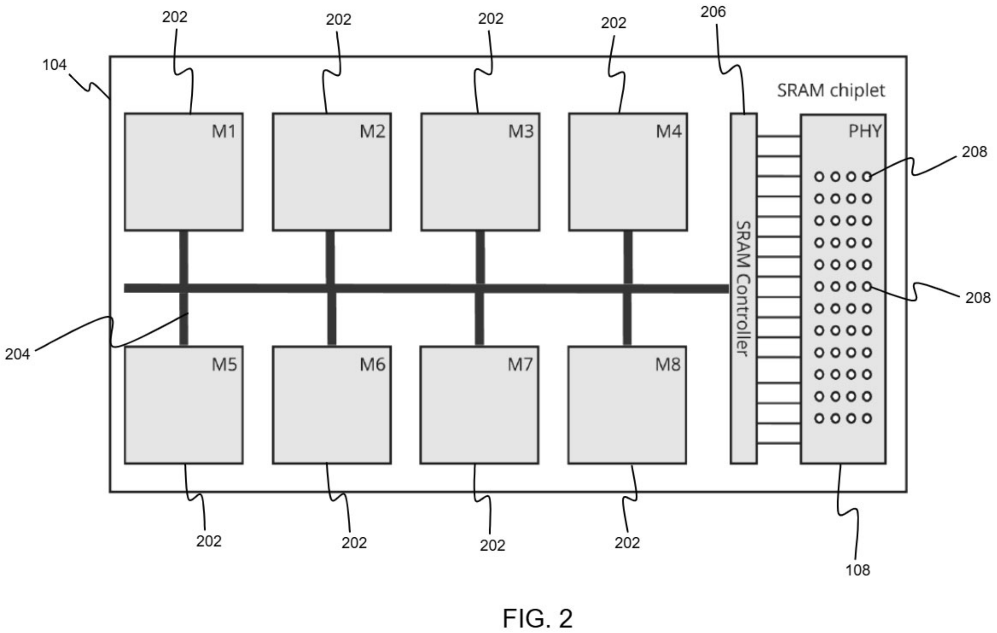

Figure 2 provides further details of one of the memory chiplets 104 shown in Figure 1. The memory chiplet 104 shown in Figure 2 illustrates the internal organization and interface components that enable flexible memory configuration. Each memory chiplet 104 in system 102 may have the same internal architecture, or different memory chiplets 104 may have different physical memory macro configurations. While the memory chiplets 104 may be SRAM chiplets in some examples, other memory technologies may be employed.

Memory chiplet 104 comprises one or more physical memory macros 202. Each physical memory macro 202 is a pre-designed memory block with a fixed physical width and physical depth determined during the chip implementation phase. The physical dimensions of each physical memory macro 202 cannot be altered after manufacturing. In Figure 2, eight physical memory macros 202 are shown, labelled M1 through M8. Physical memory macros 202 may all have the same size, providing uniform memory blocks throughout memory chiplet 104. Alternatively, physical memory macros 202 of different sizes may be included within the same memory chiplet 104 to provide flexibility in memory configuration and to balance speed versus capacity requirements.

Bus 204 couples physical memory macros 202 to memory-side memory controller 206. Bus 204 carries signals including chip select, address, byte or word select, and read and write data between memory-side memory controller 206 and each of the physical memory macros 202. Bus 204 may comprise multiple separate signal lines or groups of signal lines, with different portions of bus 204 connecting to different physical memory macros 202. The width and configuration of bus 204 accommodates the aggregate bandwidth requirements of all physical memory macros 202 that may be accessed simultaneously.

The system 102 also includes a memory controller. The memory controller includes a memory-side memory controller 206 that manages access to physical memory macros 202. The memory controller function may be distributed between the memory chiplet side and the compute chiplet side. In some examples, all memory controller functionality resides on the compute chiplet side, while in other examples all functionality resides on the memory chiplet side within memory-side memory controller 206. Typically, the memory controller function is split between the two sides. The compute chiplet side may manage logical memory sizes and interface with processing logic, while memory-side memory controller 206 translates address requests from logical addresses to physical addresses and manages access to physical memory macros 202. Memory-side memory controller 206 arbitrates between different physical memory macros 202 when multiple access requests are received, and combines reads from or writes to multiple physical memory macros 202 that are logically grouped together.

Physical interface 108 provides the communication path between memory chiplet 104 and compute chiplet 106. Physical interface 108 delivers power, ground, clock signals, control signals, and data signals between the two chiplets. The configuration of physical interface 108 may be tailored to meet different requirements, with the number of power, ground, control, and data lines varying depending on the size of physical memory macros 202, the bandwidth required, and cost considerations. Physical interface 108 comprises a first set of connectors (not shown in Figure 2) on the compute chiplet side, and a second set of connectors 208 on the memory chiplet side. The layout of the first and second sets of connectors is the same, enabling the physical interface 108 to provide consistent connectivity regardless of the orientation or stacking arrangement of the chiplets.

Second set of connectors 208 are shown in Figure 2 as a series of connection points arranged in an array. Second set of connectors 208 couple to the first set of connectors on the compute chiplet side to complete physical interface 108. Each connector in second set of connectors 208 may correspond to a TSV 110 that passes through memory chiplet 104. Second set of connectors 208 interface with memory-side memory controller 206, providing the electrical pathways through which memory access requests are received from compute chiplet 106 and through which read data is returned to compute chiplet 106. The specific arrangement shown in Figure 2 is shown only as an example. The actual arrangement will depend upon a number of factors, including memory size, bandwidth and signalling protocols.

Memory-side memory controller 206 connects to physical interface 108 to receive memory access requests from compute chiplet 106. When a memory access request is received through physical interface 108, memory-side memory controller 206 determines which physical memory macro 202 or combination of physical memory macros 202 corresponds to the logical address in the request. Memory-side memory controller 206 then drives the appropriate signals on bus 204 to access the selected physical memory macros 202. For write operations, memory-side memory controller 206 routes write data received through physical interface 108 to the appropriate physical memory macros 202. For read operations, memory-side memory controller 206 collects read data from the accessed physical memory macros 202 and transmits the data back through physical interface 108 to compute chiplet 106. The arrangement of physical memory macros 202 within memory chiplet 104 enables flexible logical memory configurations, as will be described in more detail below.

The identical layout of the first and second sets of connectors simplifies the design and manufacturing process for both compute chiplet 106 and memory chiplets 104. Standardized bump and TSV placement patterns can be used across both chiplet types, reducing the number of unique manufacturing steps and tooling requirements. This standardization allows the chiplets to be stacked in different orientations or orders while maintaining proper electrical connectivity through physical interface 108.

In some examples, the layout of the first set of connectors and second set of connectors 208 need not be identical. The first and second sets of connectors may instead be configured with different layouts that are nonetheless compatible when aligned during assembly. Such configurations allow the connectors to establish communication between compute chiplet 106 and memory chiplet 104 when the chiplets are properly positioned relative to each other.

Each of memory chiplets 104 may further comprise a substrate. The plurality of physical memory macros 202 are formed on the substrate. The substrate provides mechanical support for physical memory macros 202 and includes routing layers that connect physical memory macros 202 to bus 204 and to physical interface 108. TSVs 110 pass through the substrate to enable vertical electrical connections between stacked chiplets.

### Physical Memory Macro Structure

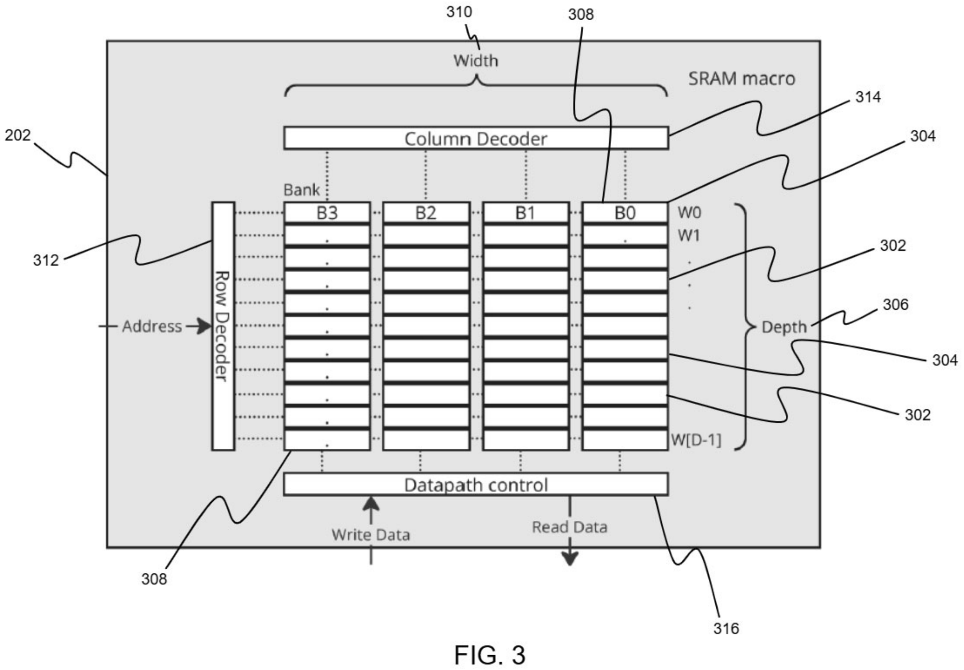

Figure 3 shows further details of one of the physical memory macros 202 from Figure 2. The physical memory macro 202 is a pre-designed, reusable functional block that provides memory storage capability. Each physical memory macro 202 has a fixed size determined during chip implementation and manufacture. The physical size cannot be altered after fabrication is complete.

The physical memory macro 202 includes a plurality of rows 304 of memory cells 302 and a plurality of columns 308 of memory cells 302. The memory cells 302 are arranged in a two-dimensional array. Each memory cell 302 may store a single bit of data. The plurality of rows 304 defines a macro depth 306, representing the number of addressable locations within the physical memory macro 202. The plurality of columns 308 defines a macro width 310, representing the number of bits that can be accessed simultaneously in a single read or write operation.

Each physical memory macro 202 also includes a row decoder 312, a column decoder 314, and a datapath control 316.

The purpose and function of these components will be familiar to the skilled person and is therefore not described further.

The interface to the physical memory macro 202 includes a read data output and a write data input, both having a width equal to the macro width 310. In the example shown, the macro width 310 is 32 bits, enabling 32 bits to be read or written in a single access. The read data output provides data retrieved from the selected memory cells 302. The write data input receives data to be stored in the selected memory cells 302.

Multiple physical memory macros 202 may have identical configurations, each with the same macro depth 306 and macro width 310. Alternatively, different physical memory macros 202 within the same memory chiplet 104 may have different sizes. Larger physical memory macros 202 provide greater storage capacity but may have longer access times. Smaller physical memory macros 202 provide faster access but reduced capacity. The choice of physical memory macro sizes involves trade-offs between speed, capacity, and power consumption.

The physical memory macro 202 may include additional features for testing and low-power operation. Test signals enable verification of proper operation during manufacturing. Low-power signals allow portions of the physical memory macro 202 to be placed in reduced power states when not actively being accessed. These additional features are managed through separate interface signals that are not shown in the figure.

### Compute Chiplet Architecture

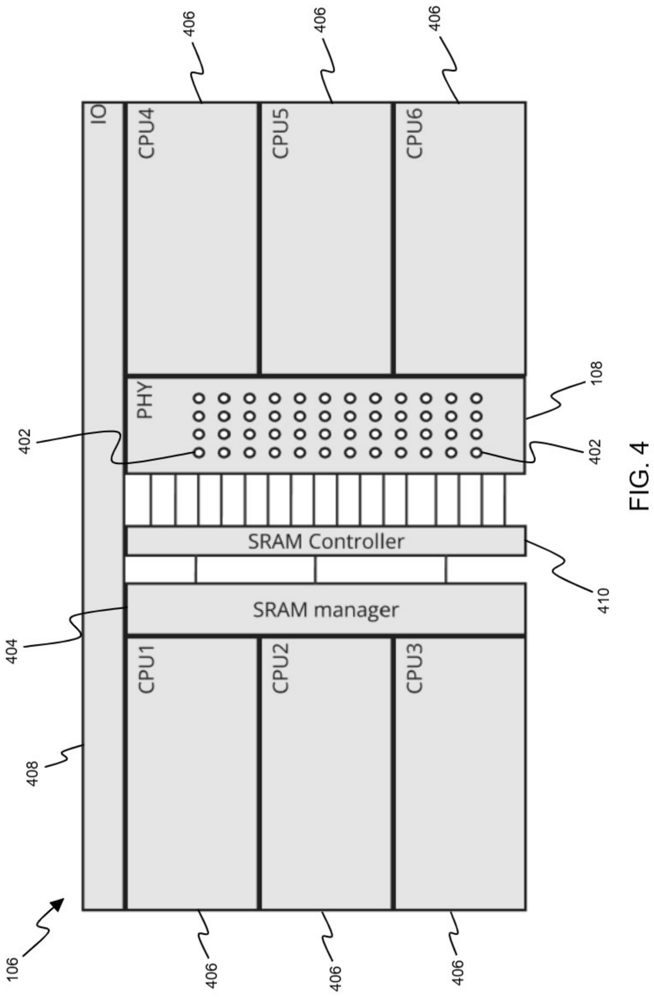

Figure 4 shows additional detail of compute chiplet 106 from Figure 1. Compute chiplet 106 includes one or more compute processor cores 406, which may comprise a central processing unit (CPU), graphics processing unit (GPU), neural processing unit (NPU), or other application-specific processor. The number of compute processor cores 406 may vary depending on the application requirements. In some examples, compute chiplet 106 includes multiple compute processor cores 406 arranged to operate in parallel. Each compute processor core 406 may be configured to execute instructions and perform computational tasks. The compute processor cores 406 may access memory through memory manager 404.

Compute chiplet 106 includes memory manager 404, which forms a bridge between one or more compute processor cores 406 and compute-side memory controller 410. Memory manager 404 may be referred to as an SRAM manager in examples where the memory chiplets comprise SRAM memory. Memory manager 404 receives memory access requests from one or more compute processor cores 406 and forwards these requests to compute-side memory controller 410. Memory manager 404 may arbitrate between multiple simultaneous memory access requests from different compute processor cores 406. In some examples, memory manager 404 manages access to logical memory macros defined by compute-side memory controller 410.

The memory controller also includes a compute-side memory controller 410, which is configured to control access to the memory chiplet. Compute-side memory controller 410 interfaces with physical interface 108 to communicate with one or more memory chiplets 104. Compute-side memory controller 410 communicates with memory-side memory controller 206 to pass requests for memory access to the memory chiplet 104. The memory-side memory controller 206 translates logical memory addresses received from compute-side memory controller 410 into physical memory addresses corresponding to specific physical memory macros within memory chiplets 104. Memory-side memory controller 206 generates control signals for reading from and writing to the physical memory macros. The memory-side memory controller 206 manages the timing and sequencing of memory access operations to ensure data integrity.

Compute-side memory controller 410 defines one or more logical memory macros. Each logical memory macro has a logical width and a logical depth which may be different to the physical width or physical depth of the physical memory macros in memory chiplets 104. The logical width corresponds to the number of bits that can be accessed in a single memory operation, while the logical depth corresponds to the number of addressable locations. Compute-side memory controller 410 constructs each logical memory macro by aggregating memory cells from one or more physical memory macros. A logical memory macro may include memory cells from a single physical memory macro, or may span multiple physical memory macros. The mapping between logical memory macros and physical memory macros is not visible to one or more compute processor cores 406.

Physical interface 108 couples compute chiplet 106 to one or more memory chiplets 104. Physical interface 108 comprises first set of connectors 402 in compute chiplet 106. First set of connectors 402 may comprise TSVs or other connection elements that mate with corresponding connectors in memory chiplets 104. Physical interface 108 carries signals between compute-side memory controller 410 and the memory controller in memory chiplets 104. These signals include address signals, data signals, control signals, and clock signals. Physical interface 108 may also carry power and ground connections. The physical connections in physical interface 108 enable vertical communication between compute chiplet 106 and memory chiplets 104 stacked above or below it.

First set of connectors 402 provides the physical connection points for physical interface 108 on the compute chiplet side. First set of connectors 402 may be arranged in a pattern that matches a second set of connectors in memory chiplets 104. The layout of first set of connectors 402 and the second set of connectors may be the same, facilitating alignment during assembly. First set of connectors 402 may include connections for data lines, address lines, control signals, power supply, and ground. The number and arrangement of connections in first set of connectors 402 determines the maximum bandwidth available for communication between compute chiplet 106 and memory chiplets 104.

Compute chiplet 106 includes one or more IO interfaces 408. IO interfaces 408 provide connectivity to other chiplets or components in system 102. In the configuration shown, IO interfaces 408 couple compute chiplet 106 to other elements such as IO die or HBM logic die . IO interfaces 408 enable communication in a two-dimensional plane across interposer 114. The physical characteristics of IO interfaces 408 may differ from those of physical interface 108, as IO interfaces 408 are optimized for lateral communication across the interposer rather than vertical communication through TSVs. IO interfaces 408 may include serializer-deserializer circuits, voltage level shifters, or other interface circuitry appropriate for the communication protocol used.

Compute-side memory controller 410 may define multiple logical memory macros simultaneously. Different logical memory macros may have different logical widths and logical depths to match the requirements of different compute processor cores 406 or different applications running on compute chiplet 106. Compute-side memory controller 410 maintains separate logical interfaces for each defined logical memory macro. Memory manager 404 routes memory access requests to the appropriate logical interface based on the target memory region. The ability to define multiple logical memory macros with varying characteristics provides flexibility in memory allocation and enables efficient use of the physical memory resources in memory chiplets 104.

The identical layout of first set of connectors 402 and the second set of connectors in memory chiplets 104 simplifies the manufacturing process. Standardized bump and TSV placement patterns can be used across both compute and memory chiplets, reducing the number of distinct manufacturing steps required. This standardization enables the same assembly procedures to be applied regardless of chiplet orientation or stacking order.

In some examples, the layout of first set of connectors 402 and the second set of connectors in memory chiplets 104 need not be identical. The connectors may be configured with different layouts while still enabling proper alignment during assembly. This configuration allows communication between compute chiplet 106 and memory chiplets 104 even when the connector patterns differ between the chiplet types.

The integration of compute-side memory controller 410 within compute chiplet 106 alongside one or more compute processor cores 406 enables close coordination between computation and memory access operations. Compute-side memory controller 410 can define logical memory macros with characteristics that align with the specific data access patterns of the compute processor cores 406. This arrangement reduces latency in memory operations by minimizing the communication path between processing elements and memory control logic.

Compute chiplet 106 can be developed without requiring detailed knowledge of the physical memory macro configurations that will be present in memory chiplets 104. Compute-side memory controller 410 defines logical memory requirements based on the needs of one or more compute processor cores 406, and these logical requirements are subsequently mapped to available physical memory resources. This separation allows compute chiplet 106 and memory chiplets 104 to be designed, manufactured, and tested independently before system integration.

### Logical-to-Physical Memory Mapping

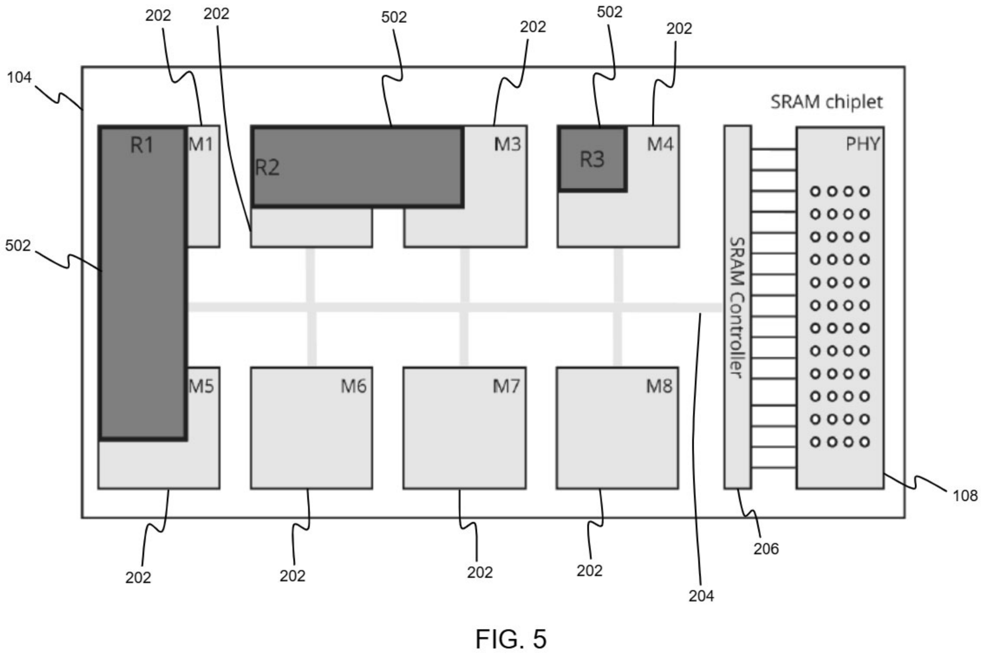

Figure 5 relates to the features shown in Figure 2, illustrating the memory chiplet 104 with logical memory macros 502 overlaid on the physical memory macros 202. The logical memory macros 502 represent memory configurations as perceived by compute chiplet 106, while the physical memory macros 202 represent the actual hardware implementation within memory chiplet 104. The translation between logical and physical representations occurs within memory-side memory controller 206, which manages the mapping without the compute chiplet 106 being aware.

Three logical memory macros 502 are shown in the example of Figure 5, labelled R1, R2, and R3. Each logical memory macro 502 may be constructed from one or more physical memory macros 202. Logical memory macro R1 spans physical memory macros M1 and M5. Logical memory macro R2 spans physical memory macros M2 and M3. Logical memory macro R3 spans physical memory macro M4 only. The remaining physical memory macros M6, M7, and M8 are not assigned to any logical memory macro 502 in this example and remain available for future allocation.

The number of logical memory macros 502 may vary depending on requirements from compute chiplet 106. There may be only one logical memory macro 502, or there may be several. Each logical memory macro 502 may cover all of the physical memory macros 202, only one of them, or two or more. The specific allocation depends on compute requirements, including the desired width and depth of memory access. Compute-side memory controller 410 receives configuration requests from compute chiplet 106 and allocates physical memory macros 202 accordingly to form the requested logical memory macros 502.

The logical memory macros 502 may have different dimensions to the physical memory macros 202. A logical memory macro 502 may be wider than a single physical memory macro 202, requiring horizontal combination of multiple physical memory macros 202. Alternatively, a logical memory macro 502 may be deeper than a single physical memory macro 202, requiring vertical stacking of address spaces from multiple physical memory macros 202. The logical memory macro 502 may also be narrower or shallower than a single physical memory macro 202, utilizing only a portion of the available physical capacity.

When a logical memory macro 502 spans multiple physical memory macros 202 horizontally, memory-side memory controller 206 coordinates simultaneous access to the constituent physical memory macros 202. For example, logical memory macro R2 combines physical memory macros M2 and M3. When compute chiplet 106 issues a read or write request to logical memory macro R2, memory-side memory controller 206 activates both physical memory macros M2 and M3 simultaneously. Data from physical memory macro M2 forms one portion of the logical word, while data from physical memory macro M3 forms another portion. Memory-side memory controller 206 assembles these portions into a single logical word for transmission to compute chiplet 106.

When a logical memory macro 502 spans multiple physical memory macros 202 vertically, memory-side memory controller 206 translates logical addresses to physical addresses. The logical address space of the logical memory macro 502 is divided across the constituent physical memory macros 202. Lower logical addresses map to one physical memory macro 202, while higher logical addresses map to another physical memory macro 202. Memory-side memory controller 206 determines which physical memory macro 202 contains the requested address and selects that physical memory macro 202 for access.

Bus 204 carries signals between memory-side memory controller 206 and each physical memory macro 202. The signals include chip select, address, byte or word select, and read and write data. Memory-side memory controller 206 drives the appropriate signals on bus 204 to access selected physical memory macros 202. When multiple physical memory macros 202 are accessed simultaneously, memory-side memory controller 206 activates multiple chip select lines on bus 204. When a single physical memory macro 202 is accessed, memory-side memory controller 206 activates only the corresponding chip select line.

The configuration of logical memory macros 502 may be established during a setup phase before normal memory operations begin. During the setup phase, compute chiplet 106 communicates desired memory configurations to compute-side memory controller 410. These configurations specify the width and depth of each logical memory macro 502. Compute-side memory controller 410 determines whether sufficient physical memory macros 202 are available to satisfy the requests. If sufficient physical memory macros 202 are available, compute-side memory controller 410 allocates physical memory macros 202 to form the requested logical memory macros 502.

Memory-side memory controller 206 maintains mapping information associating logical memory macros 502 with physical memory macros 202. This mapping information includes the identity of physical memory macros 202 assigned to each logical memory macro 502, the arrangement of those physical memory macros 202, and address translation parameters. When a memory request arrives from compute chiplet 106, memory-side memory controller 206 consults the mapping information to determine which physical memory macros 202 to access and how to translate the logical address to physical addresses.

The allocation of physical memory macros 202 to logical memory macros 502 may be reconfigured after initial setup. Compute chiplet 106 may request changes to the configuration of logical memory macros 502. Compute-side memory controller 410 may deallocate physical memory macros 202 from existing logical memory macros 502 and reallocate them to new logical memory macros 502. This reconfiguration capability provides flexibility to adapt memory organization to changing computational requirements.

The logical memory macros 502 shown in Figure 5 demonstrate that compute chiplet 106 can be designed independently of the specific physical memory macro 202 configuration. Compute chiplet 106 specifies desired memory characteristics in terms of logical memory macros 502 without knowledge of the underlying physical memory macro 202 architecture. Memory-side memory controller 206 bridges between the logical view presented to compute chiplet 106 and the physical implementation within memory chiplet 104. This separation allows compute chiplet 106 and memory chiplet 104 to be designed, manufactured, and optimized independently before integration into a complete system.

### Through-Silicon Via Interface Configuration

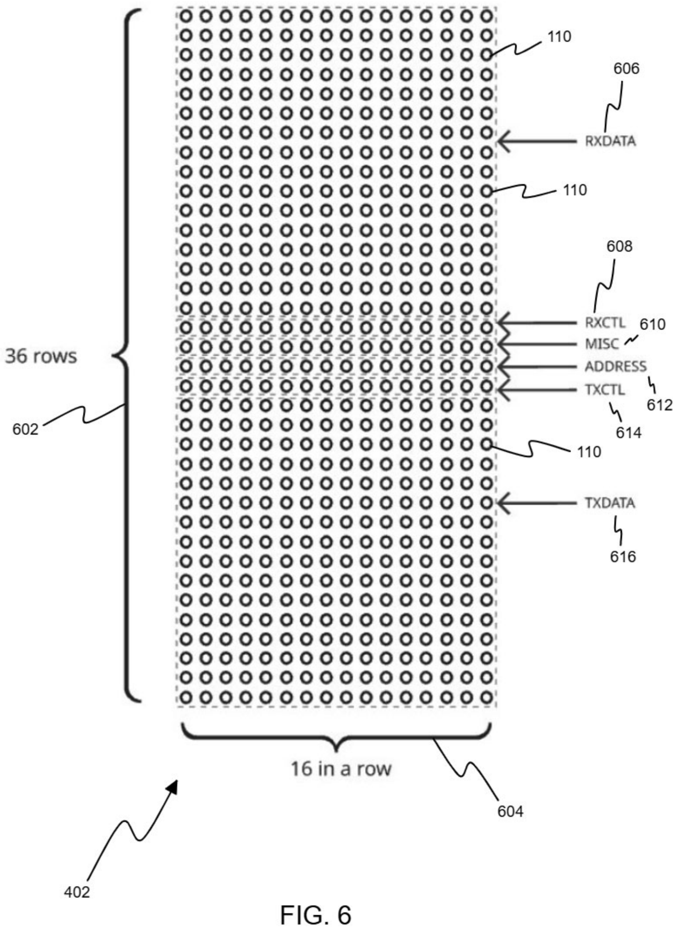

Figure 6 relates to features shown in Figures 2 and 4, and illustrates an arrangement of TSVs 110 forming physical interface 108 between memory chiplet 104 and compute chiplet 106. The diagram shows a schematic representation of first set of connectors 402. The same arrangement may apply to the second set of connectors 208. The arrangement comprises rows of TSVs 602 and columns of TSVs 604. In this example, the array contains 36 rows and 16 columns, providing 576 individual TSV connections. Each TSV 110 provides a vertical electrical pathway through the silicon substrate of each chiplet, enabling signals to pass between stacked chiplets. The uniform spacing and regular grid pattern of TSVs 110 facilitates alignment during assembly and provides consistent electrical characteristics across the interface.

TSVs 110 are organized into functional groups corresponding to different signal types. RXDATA 606 designates a group of TSVs 110 allocated for receiving data signals from compute chiplet 106 into memory chiplet 104. RXCTL 608 designates TSVs 110 carrying receive control signals that accompany the data reception process. ADDRESS 612 designates TSVs 110 that carry address signals specifying memory locations to be accessed. MISC 610 designates TSVs110 allocated for miscellaneous signals, which may include boot time management signals, configuration signals, or other auxiliary functions. TXCTL 614 designates TSVs 110 carrying transmit control signals that manage data transmission from memory chiplet 104 to compute chiplet 106. TXDATA 616 designates TSVs 110 allocated for transmitting data signals from memory chiplet 104 back to compute chiplet 106. The functional grouping of TSVs 110 organizes the physical interface according to signal purpose, simplifying routing within each chiplet and enabling efficient signal management.

The number of TSVs 110 allocated to each functional group determines the bandwidth available for that signal type. In the example shown, RXDATA 606 and TXDATA 616 occupy multiple rows of TSVs 110, reflecting the need for high bandwidth data transfer. The allocation of TSVs 110 to data signals enables wide parallel data paths between chiplets. ADDRESS 612 occupies fewer TSVs 110 than the data groups, providing sufficient address lines to specify memory locations within the logical memory macros defined by compute-side memory controller 410. The number of address TSVs 110 accommodates the maximum addressable space when physical memory macros 202 are combined into the largest possible logical memory macro. RXCTL 608 and TXCTL 614 each occupy a smaller number of TSVs 110, as control signals typically require less bandwidth than data signals. MISC610 provides additional connectivity for signals that do not fall into the other categories.

The arrangement shown enables flexible logical memory configurations without requiring changes to the physical TSV layout. When compute-side memory controller 410 defines a logical memory macro with a particular logical width and logical depth, the data transfer utilizes a subset of the available TSVs 110 in RXDATA 606 and TXDATA 616. A logical memory macro with a narrow logical width uses fewer data TSVs 110 per transaction, while a logical memory macro with a wide logical width uses more data TSVs 110 per transaction. The ADDRESS 612 TSVs 110 carry address values corresponding to the logical address space of the defined logical memory macro. Memory-side memory controller 206 receives these logical addresses through ADDRESS 612 and translates them to physical addresses corresponding to specific physical memory macros 202. The control signals carried by RXCTL 608 and TXCTL 614 coordinate the timing and validity of data and address signals, ensuring proper synchronization between compute chiplet 106 and memory chiplet 104.

The functional allocation shown in Figure 6 represents one possible configuration of TSVs 110. Different applications may require different allocations of TSVs 110 among the functional groups. An application requiring higher data bandwidth may allocate more TSVs 110 to RXDATA 606 and TXDATA 616, while an application requiring a larger addressable space may allocate more TSVs 110 to ADDRESS 612. The total number of TSVs110 may also vary depending on the size of memory chiplet 104, the bandwidth requirements, and manufacturing constraints. The modular nature of the TSV arrangement allows the functional allocation to be adjusted during the design phase to match specific system requirements, while the physical manufacturing process for creating TSVs110 remains consistent across different configurations.

TSVs 110 provide direct vertical electrical connections passing completely through the silicon substrate of each chiplet. These vertical pathways enable high-bandwidth data transfer between stacked chiplets with minimal signal degradation compared to lateral routing approaches. The vertical interconnection supports wide data interfaces, such as the 256-bit paths illustrated by the allocation of multiple rows of TSVs 110 to RXDATA 606 and TXDATA 616, enabling parallel data transfer between memory chiplet 104 and compute chiplet 106.

### Compute-Side Memory Controller Register Architecture

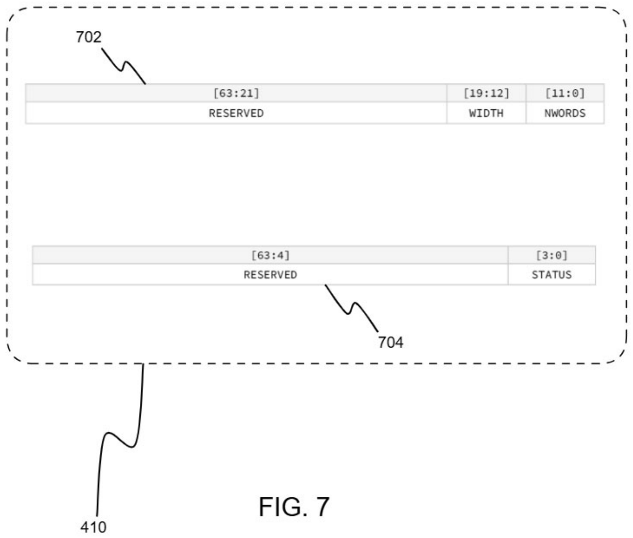

Figure 7 relates to features shown in Figure 4, providing additional detail of compute-side memory controller 410 from compute chiplet 106. Compute-side memory controller 410 manages the logical interface between one or more compute processor cores 406 and memory chiplets 104. Compute-side memory controller 410 includes logical memory macro size register 702 and logical memory macro status register 704. These registers facilitate the configuration and management of logical memory macros that map to physical memory macros in memory chiplets 104.

Logical memory macro size register 702 stores the size of a defined logical memory macro. The size includes both the logical width and the logical depth of the logical memory macro. The logical width indicates the number of bits that can be accessed in a single memory operation, while the logical depth indicates the number of addressable word locations within the logical memory macro. Logical memory macro size register 702 may be a 64-bit register, with specific bit fields allocated to store the width and depth values. For example, bits [19:12] may store the width value, and bits [11:0] may store the depth value. The width and depth values may be encoded such that the stored value equals the actual dimension minus one. For instance, to specify a width of 256 bits, the value 255 would be stored in bits [19:12]. Similarly, to specify a depth of 512 words, the value 511 would be stored in bits [11:0]. Other bit fields in logical memory macro size register 702 may be reserved for future use or for storing additional configuration parameters.

Memory manager 404 writes to logical memory macro size register 702 to request a logical memory macro with specific characteristics. The write operation specifies the desired logical width and logical depth for the logical memory macro. This request initiates a configuration process in which compute-side memory controller 410 attempts to allocate physical memory resources from memory chiplets 104 to satisfy the requested logical memory size. Memory manager 404 may write to multiple instances of logical memory macro size register 702 to define multiple logical memory macros with different sizes.

Logical memory macro status register 704 stores status information relating to the configuration of the logical memory macro. Logical memory macro status register 704 indicates whether the logical memory macro has been successfully configured and is available for use by one or more compute processor cores 406. Logical memory macro status register 704 may be a 64-bit register, with specific bit fields allocated to store status values. For example, bits [3:0] may store a status code. The status code may take one of several predefined values, each representing a different configuration state.

The status code in logical memory macro status register 704 may initially be set to a reset value, indicating that no logical memory macro has been configured. When memory manager 404 writes to logical memory macro size register 702, the status code transitions to a pending value, indicating that a configuration request has been received and is being processed. Compute-side memory controller 410 communicates with memory-side memory controller 206 to determine whether sufficient physical memory resources are available to satisfy the requested logical memory size. If the requested logical memory macro can be successfully allocated, the status code transitions to an accepted value, indicating that the logical memory macro is configured and ready for use. If the requested logical memory macro cannot be allocated, for example due to insufficient available physical memory resources, the status code transitions to a rejected value, indicating that the configuration request could not be fulfilled.

Memory manager 404 monitors logical memory macro status register 704 to determine the outcome of the configuration request. Once logical memory macro status register 704 indicates that the logical memory macro has been accepted, memory manager 404 may begin issuing memory access requests to the logical memory macro. Memory manager 404 addresses the logical memory macro using logical addresses that span the configured logical width and logical depth. Memory-side memory controller 206 translates these logical addresses into physical addresses corresponding to specific physical memory macros in memory chiplets 104, without exposing the physical memory organization to memory manager 404 or one or more compute processor cores 406.

Compute-side memory controller 410 may include multiple pairs of logical memory macro size register 702 and logical memory macro status register 704, enabling the definition of multiple logical memory macros. Each pair corresponds to a separate logical interface that can be accessed independently by memory manager 404. The number of register pairs determines the maximum number of logical memory macros that can be defined simultaneously. In some examples, compute-side memory controller 410 includes four register pairs, allowing up to four logical memory macros to be configured. Different logical memory macros may have different logical widths and logical depths, tailored to the specific requirements of different compute processor cores 406 or different applications running on compute chiplet 106.

The configuration process using logical memory macro size register 702 and logical memory macro status register 704 occurs during a setup phase, which may take place during system boot or initialization. During the setup phase, compute-side memory controller 410 and memory-side memory controller 206 negotiate the allocation of physical memory resources to logical memory macros. Once all logical memory macros have been configured and their corresponding status registers indicate acceptance, compute-side memory controller 410 may transition to a run state in which memory access requests can be processed. In the run state, memory manager 404 issues read and write requests to the configured logical memory macros, and compute-side memory controller 410 routes these requests through physical interface 108 to memory chiplets 104.

The use of logical memory macro size register 702 and logical memory macro status register 704 enables flexible memory configuration without requiring compute chiplet 106 to have prior knowledge of the physical memory organization in memory chiplets 104. Compute chiplet 106 specifies logical memory requirements based on application needs, and the memory controllers handle the mapping to physical resources. This arrangement allows compute chiplet 106 and memory chiplets 104 to be designed and manufactured independently, and supports the use of different memory chiplet configurations with the same compute chiplet design.

Storing the logical memory macro size in logical memory macro size register 702 enables compute-side memory controller 410 to maintain configuration information locally within compute chiplet 106. This local storage allows compute-side memory controller 410 to access logical memory parameters directly from the register without communicating with memory chiplets 104 for each memory operation. The register-based approach reduces latency and communication overhead during memory access operations in the run state.

In an alternative example, the logical memory macro size register 702 and the logical memory macro status register 704 may be provided by the memory-side memory controller 206.

### Logical Memory Macro Establishment Method

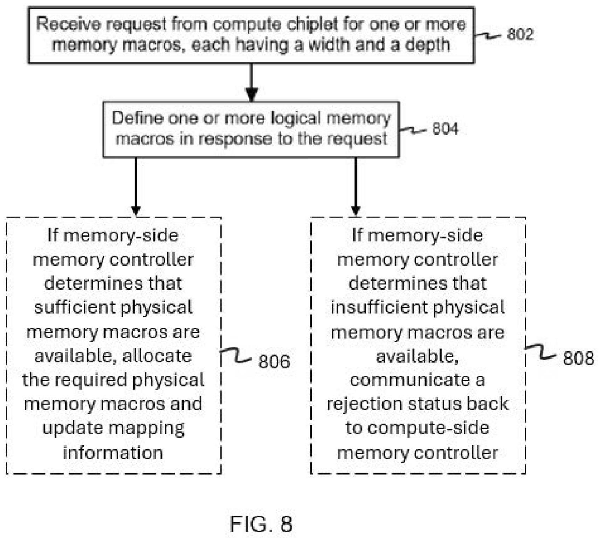

Figure 8 illustrates a method of establishing a logical memory macro in memory chiplet 104. The method enables compute chiplet 106 to request memory resources with specific characteristics, and enables compute-side memory controller 410 to define logical memory macros that map to physical memory macros 202 within memory chiplet 104.

The method begins at block 802, where compute-side memory controller 410 receives a request from compute chiplet 106 for one or more memory macros. Each requested memory macro has a specified width and depth. The request originates from memory manager 404 within compute chiplet 106, which determines the memory requirements based on the needs of one or more compute processor cores 406. The request may specify a single logical memory macro, or may specify multiple logical memory macros with different widths and depths to serve different computational tasks.

When memory manager 404 writes to logical memory macro size register 702, the corresponding logical memory macro status register 704 transitions from a reset state to a pending state. The status code in bits [3:0] of logical memory macro status register 704 changes to indicate that a configuration request has been received and is being processed. Compute-side memory controller 410 communicates the request to memory-side memory controller 206 through physical interface 108. The communication includes the requested width and depth values, along with an identifier indicating to which logical interface the request corresponds. Compute-side memory controller 410 receives this information and begins evaluating whether sufficient physical memory resources are available to satisfy the request.

The method proceeds to block 804, where compute-side memory controller 410 defines one or more logical memory macros in response to the request. Each logical memory macro has a logical width and logical depth corresponding to the requested width and depth. The logical width and logical depth may be different from the physical width or physical depth of individual physical memory macros 202. Each logical memory macro includes memory cells 302 from one or more physical memory macros 202. Memory-side memory controller 206 determines how to aggregate physical memory macros 202 to construct the requested logical memory macro based on the relationship between the requested dimensions and the physical dimensions of available physical memory macros 202.

Memory-side memory controller 206 maintains a record of which physical memory macros 202 have been allocated to which logical memory macros. This mapping information includes the identity of physical memory macros 202 assigned to each logical memory macro, the arrangement of those physical memory macros 202, and parameters for translating logical addresses to physical addresses. When a physical memory macro 202 has been allocated to a logical memory macro, it becomes unavailable for allocation to other logical memory macros. Memory-side memory controller 206 tracks the allocation status of all physical memory macros 202 to prevent conflicts and ensure that each physical memory macro 202 is assigned to at most one logical memory macro at any given time.

If memory-side memory controller 206 determines that sufficient physical memory macros 202 are available to satisfy the request, it allocates the required physical memory macros 202 and updates the mapping information (block 806). Memory-side memory controller 206 then communicates an acceptance status back to compute-side memory controller 410 through physical interface 108. Compute-side memory controller 410 updates logical memory macro status register 704, changing the status code from pending to accepted. The accepted status indicates that the logical memory macro has been successfully configured and is ready for memory access operations. Memory manager 404 monitors logical memory macro status register 704 and, upon detecting the accepted status, begins issuing memory access requests to the configured logical memory macro.

If memory-side memory controller 206 determines that insufficient physical memory macros 202 are available to satisfy the request, it communicates a rejection status back to compute-side memory controller 410 (block 808). Insufficient physical memory macros 202 may result from previous allocation of physical memory macros 202 to other logical memory macros, leaving too few unallocated physical memory macros 202 to meet the current request. Compute-side memory controller 410 updates logical memory macro status register 704, changing the status code from pending to rejected. The rejected status indicates that the configuration request could not be fulfilled. Memory manager 404 may respond to the rejection by requesting a different logical memory configuration with smaller dimensions, or by deallocating existing logical memory macros to free physical memory resources.

The method may be repeated to define multiple logical memory macros. Compute chiplet 106 may issue multiple requests, each specifying different width and depth values. Each request corresponds to a separate pair of logical memory macro size register 702 and logical memory macro status register 704 within compute-side memory controller 410. Compute-side memory controller 410 processes each request independently, allocating physical memory macros 202 to each logical memory macro according to the requested dimensions. Different logical memory macros may have different logical widths and logical depths, tailored to the requirements of different compute processor cores 406 or different applications. The ability to define multiple logical memory macros with varying characteristics provides flexibility in memory allocation and enables efficient use of physical memory resources.

The method includes mechanisms to handle race conditions when multiple requests are issued simultaneously or in rapid succession. Compute-side memory controller 410 may serialize requests to memory-side memory controller 206, ensuring that each request is fully processed before the next request is transmitted. Alternatively, memory-side memory controller 206 may include arbitration logic to handle concurrent requests, processing them in a defined order and updating the corresponding status registers sequentially. These mechanisms ensure that the allocation of physical memory macros 202 remains consistent and that conflicts do not arise from simultaneous allocation attempts.

A single compute chiplet design can be used with different memory chiplet configurations, provided that the memory chiplets contain sufficient physical memory macros 202 to satisfy the logical memory requests. Similarly, a single memory chiplet design can be used with different compute chiplet designs, adapting to different logical memory configurations as requested.

The configuration process may occur during system boot or initialization. The method may also support reconfiguration of logical memory macros after initial setup. Compute chiplet 106 may request deallocation of an existing logical memory macro, freeing the associated physical memory macros 202 for reallocation. Memory manager 404 may write a reset command to logical memory macro status register 704, causing compute-side memory controller 410 to communicate a deallocation request to memory-side memory controller 206. Memory-side memory controller 206 updates its mapping information to mark the previously allocated physical memory macros 202 as available. Compute chiplet 106 may then issue a new configuration request with different dimensions, and memory-side memory controller 206 allocates physical memory macros 202 to form the new logical memory macro. This reconfiguration capability provides adaptability to changing computational requirements during system operation.

Request-driven memory allocation ensures that logical memory macros are sized to match application needs by responding to explicit configuration requests from compute chiplet 106. Memory manager 404 specifies memory requirements in terms of logical width and logical depth based on the needs of compute processor cores 406, and memory-side memory controller 206 allocates physical memory macros 202 to satisfy these specific dimensions.

### Memory Access Control Through Address Translation

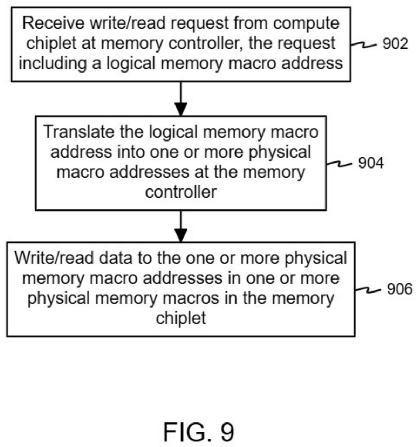

Figure 9 illustrates a method of managing write or read requests to a logical memory macro in memory chiplet 104. The method begins at block 902, where compute-side memory controller 410 receives a write or read request from compute chiplet 106. The request includes a logical memory macro address that specifies a location within the address space of one of the defined logical memory macros. The request originates from one or more compute processor cores 406, passes through memory manager 404, and is transmitted by compute-side memory controller 410 through physical interface 108. The request travels through TSVs 110, with control signals indicating the validity of the request carried by TSVs designated as RXCTL 608. The logical memory macro address is carried by TSVs designated as ADDRESS 612. For write requests, write data accompanies the address and is carried by TSVs designated as RXDATA 606. Memory-side memory controller 206 receives the request and begins processing it to determine which physical memory macros 202 contain the data corresponding to the logical address.

The method proceeds to block 904, where memory-side memory controller 206 translates the logical memory macro address into one or more physical memory macro addresses. The translation depends on the configuration of the logical memory macro to which the request is directed. Memory-side memory controller 206 consults mapping information that associates each logical memory macro with one or more physical memory macros 202. The mapping information was established during the setup phase described in relation to Figure 8, when physical memory macros 202 were allocated to form the logical memory macro. The translation process differs depending on whether the logical memory macro comprises a single physical memory macro 202, multiple physical memory macros 202 arranged horizontally, multiple physical memory macros 202 arranged vertically, or a combination of horizontal and vertical arrangements.

The translation process accounts for the width of each physical memory macro 202 when the logical memory macro comprises multiple physical memory macros 202 arranged horizontally. Each physical memory macro 202 stores a portion of each logical word. Memory-side memory controller 206 determines how to distribute data across the physical memory macros 202 based on the physical width of each physical memory macro 202. For example, if each physical memory macro 202 has a width of 32 bits and the logical memory macro has a width of 256 bits, eight physical memory macros 202 are arranged horizontally. Bits [31:0] of the logical word are stored in a first physical memory macro 202, bits [63:32] are stored in a second physical memory macro 202, and so forth, with bits [255: 224] stored in the eighth physical memory macro 202. Memory-side memory controller 206 uses this distribution pattern when routing data during write operations and when assembling data during read operations.

The method proceeds to block 906, where memory-side memory controller 206 writes or reads data to the one or more physical memory macro addresses in one or more physical memory macros 202 in memory chiplet 106. The operation performed depends on whether the request received at block 902 was a write request or a read request. Memory-side memory controller 206 drives control signals on bus 204 to activate the selected physical memory macros 202 and perform the requested operation.

For write operations, memory-side memory controller 206 activates the chip select signal for each physical memory macro 202 identified during the translation at block 904. Memory-side memory controller 206 applies the translated physical addresses to the address inputs of the selected physical memory macros 202. When multiple physical memory macros 202 are accessed simultaneously due to horizontal arrangement, memory-side memory controller 206 applies the same row address to all selected physical memory macros 202. Memory-side memory controller 206 distributes the write data received from compute chiplet 106 across the selected physical memory macros 202. Each physical memory macro 202 receives the portion of the write data corresponding to its position in the horizontal arrangement. The write data is applied to the data inputs of the selected physical memory macros 202. Row decoder 312 within each selected physical memory macro 202 activates the addressed row, column decoder 314 selects the appropriate columns, and datapath control 316 writes the data to memory cells 302 in the selected row and columns.

For read operations, memory-side memory controller 206 activates the chip select signal for each physical memory macro 202 identified during the translation at block 904. Memory-side memory controller 206 applies the translated physical addresses to the address inputs of the selected physical memory macros 202. Row decoder 312 within each selected physical memory macro 202 activates the addressed row, column decoder 314 selects the appropriate columns, and datapath control 316 retrieves data from memory cells 302 in the selected row and columns. Each selected physical memory macro 202 outputs read data corresponding to its portion of the logical word. Memory-side memory controller 206 collects the read data from each physical memory macro 202. When multiple physical memory macros 202 are accessed simultaneously due to horizontal arrangement, memory-side memory controller 206 assembles the portions of read data into a single logical word. The assembled read data is transmitted back to compute chiplet 106 through physical interface 108, with the data occupying TSVs designated as TXDATA 616. Control signals indicating the validity of the read response are carried by TSVs designated as TXCTL 614. Compute-side memory controller 410 receives the read data and forwards it to memory manager 404, which provides the data to the requesting compute processor core 406.

The method enables atomic read and write operations to logical memory macros. When compute chiplet 106 issues a write request to a logical address followed by a read request to the same logical address, the read operation returns the data written by the write operation. Memory-side memory controller 206 ensures atomicity by completing each operation before beginning the next operation. When a logical memory macro comprises multiple physical memory macros 202, memory-side memory controller 206 coordinates simultaneous access to all constituent physical memory macros 202, ensuring that the operation completes consistently across all physical memory macros 202 before the next operation begins.

The method supports concurrent access to different logical memory macros when compute chiplet 106 issues requests to multiple logical memory macros. Each logical memory macro may be accessed independently, as each corresponds to a separate set of physical memory macros 202. Memory-side memory controller 206 processes requests to different logical memory macros in parallel when the physical memory macros 202 involved do not overlap.

The use of logical memory macro addresses in read and write requests provides a consistent access protocol regardless of how many physical memory macros 202 are involved in servicing each request. This consistent protocol allows the same interface between compute chiplet 106 and memory chiplet 104 to support configurations ranging from single narrow physical memory macros to wide arrays spanning multiple physical memory macros. Memory-side memory controller 206 adapts the translation process based on the configuration of each logical memory macro, while compute chiplet 106 uses the same addressing mechanism for all configurations.

### Logical Memory Macro Configuration Examples

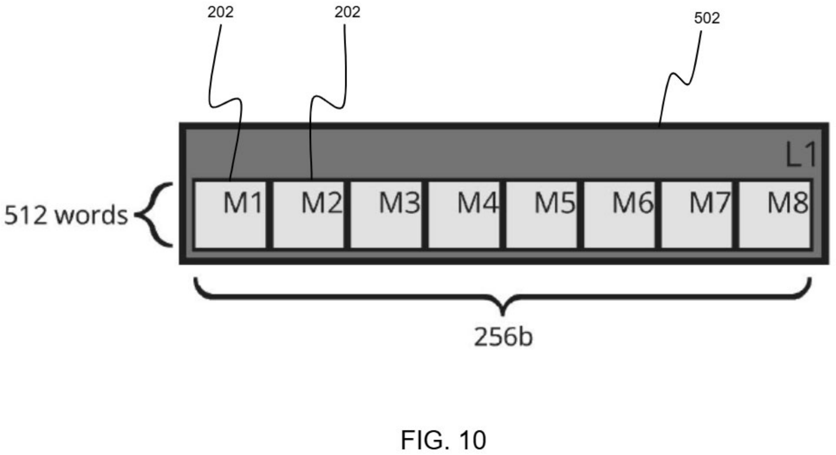

Figure 10 relates to the features shown in Figure 5, illustrating a further example configuration of logical memory macro 502. In this example, eight physical memory macros 202 labelled M1 through M8 are arranged to form a single logical memory macro 502 designated L1. Each physical memory macro is 32 bits wide and 512 words deep. The logical memory macro 502 formed from these physical memory macros is 256 bits wide and 512 words deep.

The logical memory macro L1 spans all eight physical memory macros 202 in a horizontal arrangement. Physical memory macro M1 provides bits 0 through 31 of the logical word. Physical memory macro M2 provides bits 32 through 63. Physical memory macro M3 provides bits 64 through 95. Physical memory macro M4 provides bits 96 through 127. Physical memory macro M5 provides bits 128 through 159. Physical memory macro M6 provides bits 160 through 191. Physical memory macro M7 provides bits 192 through 223. Physical memory macro M8 provides bits 224 through 255.

When compute chiplet 106 issues a read request to logical memory macro L1, memory-side memory controller 206 activates all eight physical memory macros simultaneously, with write enable asserted and the same logical address presented to each. The same logical address is presented to each physical memory macro 202. Each physical memory macro outputs 32 bits of data. Memory-side memory controller 206 assembles the eight 32-bit outputs into a single 256-bit word and transmits this word through physical interface 108 to compute chiplet 106.

When compute chiplet 106 issues a write request to logical memory macro L1, memory-side memory controller 206 distributes the 256-bit write data across the eight physical memory macros 202.

The addressable space of logical memory macro L1 is 512 words, matching the depth of each physical memory macro. Logical address 0 corresponds to physical address 0 in each of the physical memory macros M1 through M8. Logical addresses correspond to physical addresses in each of the physical memory macros M1 through M8. No address translation is required for depth mapping in this configuration.

The arrangement shown in Figure 10 provides maximum data bandwidth through physical interface 108. A single access to logical memory macro L1 transfers 256 bits between compute chiplet 106 and memory chiplet 104. This configuration utilizes the full width of the data path available through physical interface 108. The total capacity of logical memory macro L1 is 131,072 bits, representing the combined capacity of all eight physical memory macros 202.

From the perspective of compute chiplet 106, logical memory macro L1 appears as a single contiguous memory block with 256-bit width and 512-word depth.

### Write and Read Operation Timing

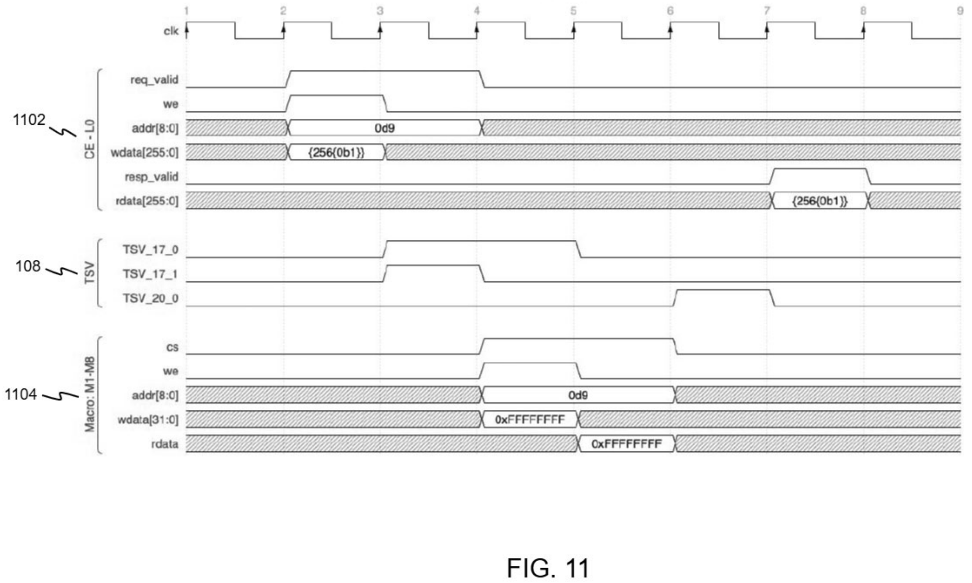

Figure 11 relates to the example shown in Figure 10, illustrating the timing of signals during write and read operations to logical memory macro 502. The timing diagram shows signal behavior across three interfaces: compute to memory controller interface 1102, physical interface 108, and memory controller to physical memory macro interface 1104. The diagram demonstrates how data is written to and subsequently read from memory chiplet 104.

The timing diagram illustrates a sequence of operations occurring over nine clock cycles. A clock signal labeled "clk" provides the timing reference. The cycles are numbered 1 through 9 at the top of the diagram. All signal transitions are synchronized to the clock edges.

At compute to memory controller interface 1102, signal "req_valid" indicates when a new read or write request is initiated. Signal "we" indicates whether the request is a write operation when asserted or a read operation when deasserted. Signal "addr[8:0]" carries the logical address for the operation. Signal "wdata[255:0]" carries the 256-bit write data. Signal "resp _valid" indicates when a read response is valid. Signal "rdata[255:0]" carries the 256-bit read data.

In cycle 2, compute chiplet 106 initiates a write request. Signal req_valid is asserted. Signal we is asserted to indicate a write operation. Signal addr[8:0] carries the value 0d9. Signal wdata[255:0] carries the value 256{0b1}, representing 256 bits all set to logic high.

In cycle 3, signal we in the compute to memory controller interface 1102 is deasserted to indicate a read request. Signal addr[8:0] carries the value 0d9 indicating the same logical address as just written to should also be read from.

At physical interface 108, signals labeled "TSV_17_0", "TSV_17_1", and "TSV_20_0" represent specific TSV connections. These signals carry control and data information between compute chiplet 106 and memory chiplet 104. The numbering corresponds to specific TSV positions within the physical interface.

In cycle 3, the write request propagates through physical interface 108. Signal TSV_17_0 is asserted to indicate to memory-side memory controller 206 that a new access is incoming. Signal TSV_17_1 is asserted to indicate that the access is a write operation. Additional TSV signals, not shown for brevity, carry the address and write data across physical interface 108.

At memory controller to physical memory macro interface 1104, signals "cs", "we", "addr[8:0]", "wdata[31:0]", and "rdata" represent the interface to physical memory macros 202. The diagram shows signals for "Macro M1-M8", representing all eight physical memory macros 202 that comprise logical memory macro 502.

In cycle 4, memory-side memory controller 206 activates all eight physical memory macros 202. Signal cs is asserted for each physical memory macro 202. Signal we is asserted for each physical memory macro 202 to indicate a write operation. Signal addr[8:0] carries the value 0d9 to each physical memory macro 202. Signal wdata[31:0] carries the value 0xFFFFFFFF, representing 32 bits all set to logic high, to each physical memory macro 202. Each physical memory macro 202 receives a different 32-bit portion of the original 256-bit write data, though the diagram shows only the value for one macro for brevity.

In cycle 6, signal TSV_20_0 is asserted at physical interface 108 to indicate that a read response is being transmitted. The 256-bit read data, assembled from the eight 32-bit outputs of physical memory macros 202, is transmitted through physical interface 108. Additional TSV signals, not shown for brevity, carry the read data.

In cycle 7, the read response arrives at compute to memory controller interface 1102. Signal resp_valid is asserted to indicate that valid read data is available. Signal rdata[255:0] carries the value 256{0b1}, matching the data that was written in the previous write operation. This demonstrates that the write and read operations to logical memory macro 502 are atomic, with the read returning the same value that was written.

### Alternative Logical Memory Macro Configurations

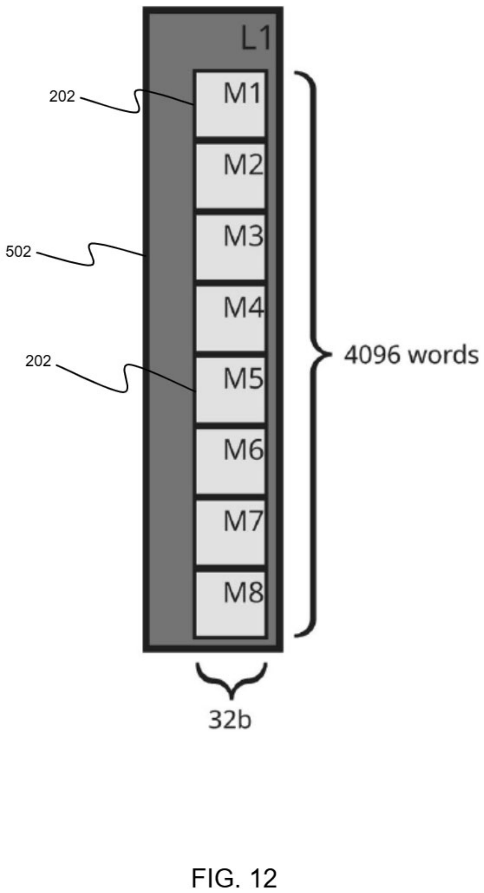

Figure 12 illustrates an alternative configuration of logical memory macro 502. In this example, eight physical memory macros 202 labelled M1 through M8 are arranged to form a single logical memory macro 502 designated L1. Each physical memory macro 202 is 32 bits wide and 512 words deep. The logical memory macro 502 formed from these physical memory macros 202 is 32 bits wide and 4096 words deep.

The logical memory macro L1 spans all eight physical memory macros 202 in a vertical arrangement. Physical memory macro M1 provides addresses 0 through 511 of the logical address space. Physical memory macro M2 provides addresses 512 through 1023. Physical memory macro M3 provides addresses 1024 through 1535. Physical memory macro M4 provides addresses 1536 through 2047. Physical memory macro M5 provides addresses 2048 through 2559. Physical memory macro M6 provides addresses 2560 through 3071. Physical memory macro M7 provides addresses 3072 through 3583. Physical memory macro M8 provides addresses 3584 through 4095.

When compute chiplet 106 issues a read request to logical memory macro L1, memory-side memory controller 206 translates the logical address to determine which physical memory macro 202 contains the requested data. The memory-side memory controller 206 divides the logical address by 512 to identify the physical memory macro 202 and calculates the remainder to determine the offset within that physical memory macro 202. For example, logical address 777 maps to physical memory macro M2 at offset 265. Logical address 1545 maps to physical memory macro M4 at offset 9. Memory-side memory controller 206 activates the selected physical memory macro 202 and presents the calculated offset address to that physical memory macro 202.

When compute chiplet 106 issues a write request to logical memory macro L1, memory-side memory controller 206 performs the same address translation to identify the target physical memory macro 202 and offset. The 32-bit write data is directed to the selected physical memory macro 202. Memory-side memory controller 206 activates only the selected physical memory macro 202 with write enable asserted and the calculated offset address presented. The remaining physical memory macros 202 remain inactive during this access.

The addressable space of logical memory macro L1 is 4096 words, representing eight times the depth of each individual physical memory macro 202. The width of logical memory macro L1 matches the width of a single physical memory macro 202. Address translation is required to map logical addresses to physical memory macro 202 selections and offsets. Memory-side memory controller 206 implements this translation through logic that examines the logical address and generates appropriate control signals for bus 204.

The arrangement shown in Figure 12 provides maximum addressable depth using the available physical memory macros 202. A single logical memory macro 502 can access 4096 distinct 32-bit words. This configuration utilizes the full depth capacity of all eight physical memory macros 202 combined into a single logical address space. The total capacity of logical memory macro L1 is 131,072 bits, matching the combined capacity of all eight physical memory macros 202.

The graphical representation in Figure 12 shows the physical memory macros 202 arranged vertically to illustrate the logical address mapping, but this does not correspond to any physical movement of the physical memory macros 202. From the perspective of compute chiplet 106, logical memory macro L1 appears as a single contiguous memory block with 32-bit width and 4096-word depth.

### Timing Sequence for Memory Write and Read Operations

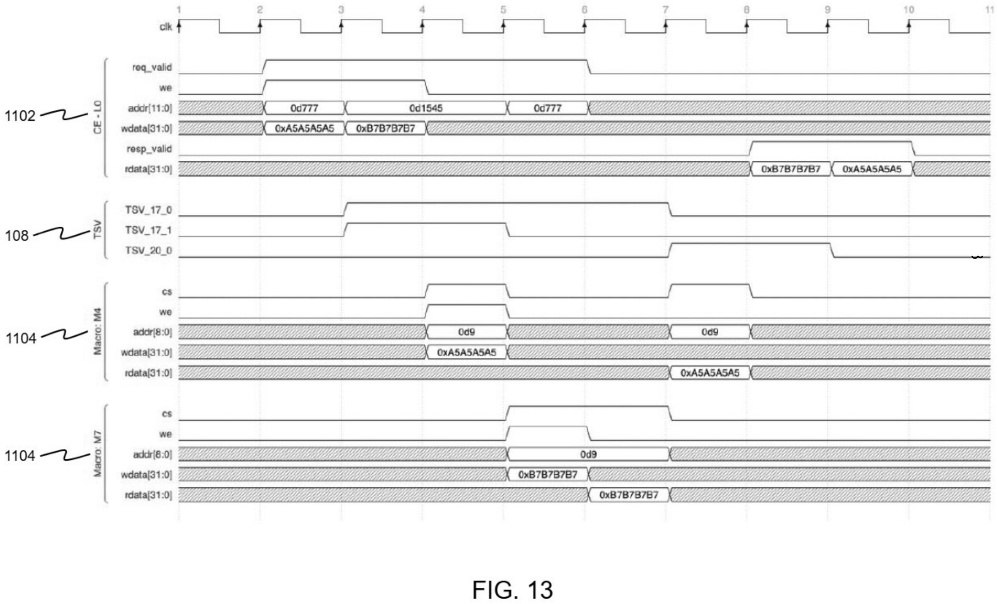

Figure 13 relates to the example shown in Figure 12, illustrating a timing diagram for writing and reading data to logical memory macro 502. The timing diagram shows the behavior of signals across three interfaces: compute to memory controller interface 1102, physical interface 108, and memory controller to physical memory macro interface 1104. The timing chart demonstrates how data is written to and subsequently read from memory chiplet 104.

The timing diagram shows a clock signal labeled "clk" that provides the timing reference for all signal transitions. The cycles are numbered 1 through 11 at the top of the diagram. All signal transitions shown are synchronized to edges of the clock signal.

At compute to memory controller interface 1102, several signals are shown. These are the same as for Figure 11, and will not be repeated here. At physical interface 108, signals labeled "TSV_17_0", "TSV_17_1", and "TSV_20_0" represent specific TSV connections within the physical interface. Again, these are shown and described in connection with Figure 11, and will not be repeated here.

At memory controller to physical memory macro interface 1104, signals shown include "cs", "we", "addr[8:0]", "wdata[31:0]", and "rdata[31:0]". These signals represent the interface to physical memory macros 202. The diagram shows signals for two physical memory macros labeled "Macro M4" and "Macro M7". This is because, in this example, write and read operations to two word lines in two different physical memory macros are described.

In cycle 2, compute chiplet 106 initiates a write request at compute to memory controller interface 1102. Signal req_valid is asserted. Signal we is asserted to indicate a write operation. Signal addr[11:0] carries the value 0d777. Signal wdata[31:0] carries the value 0xA5A5A5A5. This write request is directed to logical address 0d777 within logical memory macro 502.

In cycle 3, compute chiplet 106 initiates a second write request at compute to memory controller interface 1102. Signal req_valid remains asserted. Signal we remains asserted. Signal addr[11:0] carries the value 0d1545. Signal wdata[31:0] carries the value 0xB7B7B7B7. This second write request is directed to logical address 0d1545 within logical memory macro 502.

In cycle 4, the first write request propagates through physical interface 108. Signal TSV_17_0 is asserted to indicate an incoming access. Signal TSV_17_1 is asserted to indicate a write operation. The address and write data are transmitted through additional TSV signals not shown in the diagram.

In cycle 3, the first write request propagates through physical interface 108. Signal TSV_17_0 is asserted to indicate an incoming access. Signal TSV_17_1 is asserted to indicate a write operation. The address and write data are transmitted through additional TSV signals not shown in the diagram.

In cycle 4, memory-side memory controller 206 activates physical memory macro M4. Signal cs for Macro M4 is asserted. Signal we for Macro M4 is asserted to indicate a write operation. Signal addr[8:0] for Macro M4 carries the value 0d9. Signal wdata[31:0] for Macro M4 carries the value 0xA5A5A5A5. Memory-side memory controller 206 has mapped logical address 0d777 to physical address 0d9 within physical memory macro M4.

In cycle 4, the second write request propagates through physical interface 108. Signal TSV_17_0 is asserted. Signal TSV_17_1 is asserted. The address and write data for the second write request are transmitted through additional TSV signals.

In cycle 4, compute chiplet 106 initiates a read request at compute to memory controller interface 1102. Signal req_valid is asserted. Signal we is deasserted. Signal addr[11:0] carries the value 0d1545. This read request is directed to the same logical address as the second write request.

In cycle 5, memory-side memory controller 206 activates physical memory macro M7. Signal cs for Macro M7 is asserted. Signal we for Macro M7 is asserted. Signal addr[8:0] for Macro M7 carries the value 0d9. Signal wdata[31:0] for Macro M7 carries the value 0xB7B7B7B7. Memory-side memory controller 206 has mapped logical address 0d1545 to physical address 0d9 within physical memory macro M7. Physical memory macros M1 through M6 cover address ranges up to 0d1535, so logical address 0d1545 falls within the address range of physical memory macro M7 at offset 0d9.

In cycle 6, the first read request propagates through physical interface 108. Signal TSV_17_0 is asserted. Signal TSV_17_1 is deasserted to indicate a read operation. The address is transmitted through additional TSV signals.

In cycle 6, memory-side memory controller 206 activates physical memory macro M7 for the read operation. Signal cs for Macro M7 is asserted. Signal we for Macro M7 is deasserted. Signal addr[8:0] for Macro M7 carries the value 0d9. Physical memory macro M7 outputs the data previously written to address 0d9. Signal rdata[31:0] for Macro M7 carries the value 0xB7B7B7B7.

In cycle 7, memory-side memory controller 206 activates physical memory macro M4 for the read operation. Signal cs for Macro M4 is asserted. Signal we for Macro M4 is deasserted to indicate a read operation. Signal addr[8:0] for Macro M4 carries the value 0d9. Physical memory macro M4 outputs the data previously written to address 0d9. Signal rdata[31:0] for Macro M4 carries the value 0xA5A5A5A5.

In cycle 7, the read data from physical memory macros M4 and M7 is transmitted back through physical interface 108. Signal TSV_20_0 is asserted to indicate that a read response is being transmitted. The read data is carried on additional TSV signals not shown in the diagram.

In cycle 8, the first read response arrives at compute to memory controller interface 1102. Signal resp_valid is asserted. Signal rdata[31:0] carries the value 0xB7B7B7B7, matching the data that was written to logical address 0d1545 in cycle 3.

In cycle 9, the second read response arrives at compute to memory controller interface 1102. Signal resp_valid is asserted. Signal rdata[31:0] carries the value 0xA5A5A5A5, matching the data that was written to logical address 0d777 in cycle 2.

### Multi-Dimensional Logical Memory Macro Formation from Shared Physical Resources

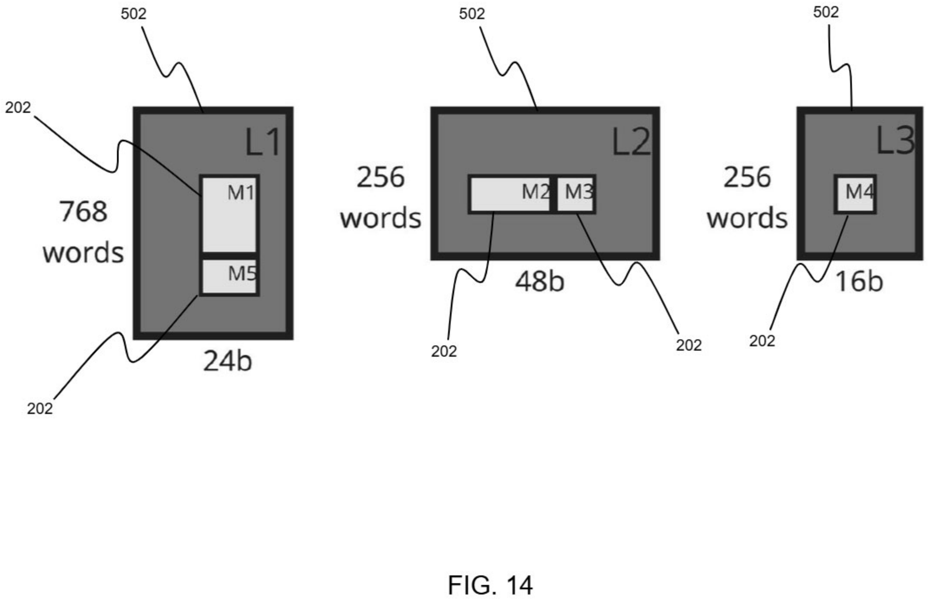

Figure 14 illustrates an alternative configuration of the logical macros shown in Figures 5, 10, and 12, illustrating a configuration where multiple logical memory macros 502 of different dimensions are formed from a shared set of physical memory macros 202. In this example, three logical memory macros 502 are configured, designated L1, L2, and L3. Each physical memory macro 202 is 32 bits wide and 512 words deep. Logical memory macro L1 is 24 bits wide and 768 words deep. Logical memory macro L2 is 48 bits wide and 256 words deep. Logical memory macro L3 is 16 bits wide and 256 words deep. Each logical memory macro 502 is constructed from a combination of physical memory macros 202.

Logical memory macro L1 is formed from physical memory macros M1 and M5. Each of physical memory macros M1 and M5 contributes a portion of their width to the 24-bit width of the logical macro L1. The depth of 768 words exceeds the depth of a single physical memory macro 202, requiring the address space to be distributed across both physical memory macros M1 and M5. Physical memory macro M1 provides addresses 0 through 511, and physical memory macro M5 provides addresses 512 through 767. Memory-side memory controller 206 translates logical addresses to determine whether to access physical memory macro M1 or M5 and calculates the offset within the selected physical memory macro 202.

Logical memory macro L2 is formed from physical memory macros M2 and M3. The width of 48 bits is achieved by combining the 32-bit width of physical memory macro M2 with a 16-bit portion of the 32-bit width of physical memory macro M3. The depth of 256 words is less than the depth of a single physical memory macro 202, so only a subset of the address range of each physical memory macro 202 is utilized. Memory-side memory controller 206 activates both physical memory macros M2 and M3 simultaneously when accessing logical memory macro L2, assembling the 48-bit data from the outputs of both physical memory macros 202.

Logical memory macro L3 is formed from physical memory macro M4. The width of 16 bits is less than the 32-bit width of physical memory macro M4, so only a portion of the data width is utilized. The depth of 256 words is less than the depth of physical memory macro M4, so only a subset of the address range is utilized. Memory-side memory controller 206 activates physical memory macro M4 and masks the data to extract or insert the relevant 16 bits when accessing logical memory macro L3.

The allocation of physical memory macros 202 to logical memory macros 502 shown in Figure 14 demonstrates that physical memory macros 202 can be shared across multiple logical memory macros 502 with different dimensions. The remaining physical memory macros M6, M7, and M8 are not allocated to any logical memory macro 502 in this example and remain available for future allocation.

When compute chiplet 106 issues a read request to logical memory macro L1, memory-side memory controller 206 translates the logical address to determine whether the requested data resides in physical memory macro M1 or M5. If the logical address is less than 512, memory-side memory controller 206 accesses physical memory macro M1 at the corresponding offset. If the logical address is 512 or greater, memory-side memory controller 206 accesses physical memory macro M5 at an offset calculated by subtracting 512 from the logical address. Memory-side memory controller 206 extracts the relevant 24 bits from the 32-bit output of the selected physical memory macro 202 and transmits this data through physical interface 208 to compute chiplet 106.

When compute chiplet 106 issues a read request to logical memory macro L2, memory-side memory controller 206 activates both physical memory macros M2 and M3 simultaneously. The logical address is presented to both physical memory macros 202. Physical memory macro M2 outputs 32 bits, and physical memory macro M3 outputs 16 bits. Memory-side memory controller 206 extracts the required 32 bits from physical memory macro M2 and the required 16 bits from physical memory macro M3, assembling these into a single 48-bit word. This 48-bit word is transmitted through physical interface 208 to compute chiplet 106.

When compute chiplet 106 issues a read request to logical memory macro L3, memory-side memory controller 206 activates physical memory macro M4. The logical address is presented to physical memory macro M4. Physical memory macro M4 outputs 32 bits. Memory-side memory controller 206 extracts the relevant 16 bits from the 32-bit output and transmits this data through physical interface 208 to compute chiplet 106. The remaining bits from the output of physical memory macro M4 are not used for this access.

When compute chiplet 106 issues a write request to logical memory macros L1, L2 or L3, memory-side memory controller 206 translates the logical address to determine the target physical memory macro 202 and offset. This process is similar to that described above and is not repeated here.

### Multi-Interface Signal Coordination for Concurrent Logical Memory Macro Access

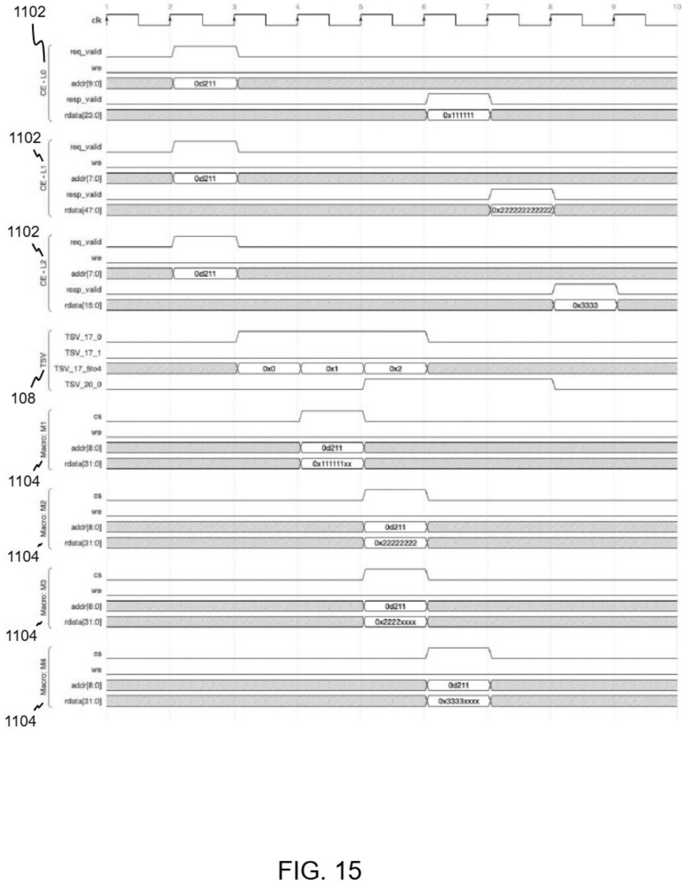

Figure 15 illustrates a timing diagram for writing and reading data to logical memory macros based on the logical macros of Figure 14. The timing diagram shows the behavior of signals across three interfaces: compute to memory controller interface 1102, physical interface 108, and memory controller to physical memory macro interface 1104. The diagram demonstrates how data is written to and subsequently read from memory chiplet 104 when multiple logical memory macros are accessed simultaneously.

The timing diagram shows a clock signal labeled "clk" that provides the timing reference for all signal transitions. The cycles are numbered 1 through 10 at the top of the diagram. All signal transitions shown are synchronized to edges of the clock signal. The diagram illustrates operations across multiple logical interfaces, demonstrating concurrent access to different logical memory macros.

At compute to memory controller interface 1102, three separate logical interfaces are shown, labeled "CE_L0", "CE_L1", and "CE_L2", representing logical macros L1 to L3 respectively. Each logical interface includes signals "req_valid", "we", "addr[9:0]", "resp_valid", and "rdata". These signals are the same as described above in the other examples. Signal rdata carries the read data, with the width varying according to the configured width of each logical interface.

Logical interface CE_L0 is configured with a width of 24 bits and a depth of 768 words. Logical interface CE_L1 is configured with a width of 48 bits and a depth of 256 words. Logical interface CE_L2 is configured with a width of 16 bits and a depth of 256 words. These configurations correspond to the logical size register programming described in connection with the third example, where logical size register LSR0 is programmed with value 64h17_2ff, logical size register LSR1 is programmed with value 64h2f_0ff, and logical size register LSR2 is programmed with value 64h0f_0ff.

In cycle 2, compute chiplet 106 initiates read requests on all three logical interfaces simultaneously. On logical interface CE_L0, signal req_valid is asserted, signal we is deasserted to indicate a read operation, and signal addr[9:0] carries the value 0d211. On logical interface CE_L1, signal req_valid is asserted, signal we is deasserted, and signal addr[7:0] carries the value 0d211. On logical interface CE_L2, signal req_valid is asserted, signal we is deasserted, and signal addr[7:0] carries the value 0d211. All three read requests target the same logical address 0d211 within their respective logical memory macros.

At physical interface 108, signals labeled "TSV_17_0", "TSV_17_1", "TSV_17_5to4", and "TSV_20_0" represent specific TSV connections within the physical interface. Signal TSV_17_0 indicates when a new access is being transmitted through physical interface 108. Signal TSV_17_1 indicates whether the access is a write operation when asserted or a read operation when deasserted. Signals TSV_17_4 and TSV_17_5 together encode an identifier indicating which logical interface originated the access. Signal TSV_20_0 indicates when a read response is being transmitted back through physical interface 108.

The compute-side memory controller 410 in compute chiplet 106 arbitrates among the three simultaneous read requests. Because physical interface 108 includes a single address interface in this implementation, the three read requests cannot propagate through physical interface 108 simultaneously. The compute-side memory controller 410 selects one request at a time to transmit through physical interface 108. The order of arbitration may vary, but in the example shown, the compute-side memory controller 410 selects the request from logical interface CE_L0 first, followed by the request from logical interface CE_L1, and then the request from logical interface CE_L2.

In cycle 3, the read request from logical interface CE_L0 propagates through physical interface 108. Signal TSV_17_0 is asserted to indicate an incoming access. Signal TSV_17_1 is deasserted to indicate a read operation. Signals TSV_17_4 and TSV_17_5 carry the value 0x0 to identify that the access originated from logical interface CE_L0. Additional TSV signals, not shown for brevity, carry the address 0d211 across physical interface 108.

In cycle 5, the read request from logical interface CE_L1 propagates through physical interface 108. Signal TSV_17_0 is asserted. Signal TSV_17_1 is deasserted. Signals TSV_17_4 and TSV_17_5 carry the value 0x1 to identify that the access originated from logical interface CE_L1. The address 0d211 is transmitted through additional TSV signals.

In cycle 5, the read request from logical interface CE_L2 propagates through physical interface 108. Signal TSV_17_0 is asserted. Signal TSV_17_1 is deasserted. Signals TSV_17_4 and TSV_17_5 carry the value 0x2 to identify that the access originated from logical interface CE_L2. The address 0d211 is transmitted through additional TSV signals.

At memory controller to physical memory macro interface 1104, signals shown include "cs", "we", "addr[8:0]", and "rdata[31:0]". These signals represent the interface to physical memory macros 202. The diagram shows signals for four physical memory macros labeled "Macro M1", "Macro M2", "Macro M3", and "Macro M4". These four physical memory macros correspond to the macros allocated to the three logical interfaces in the third example.

In cycle 4, the memory-side memory controller 206 in memory chiplet 104 activates physical memory macro M1 in response to the read request from logical interface CE_L0. Signal cs for Macro M1 is asserted. Signal we for Macro M1 is deasserted to indicate a read operation. Signal addr[8:0] for Macro M1 carries the value 0d211. Physical memory macro M1 outputs the data previously stored at address 0d211. Signal rdata[31:0] for Macro M1 carries the value 0x111111xx. Because logical interface CE_L0 has a width of 24 bits, the memory-side memory controller 206 retrieves 24 bits from physical memory macro M1.

In cycle 5, the memory-side memory controller 206 in memory chiplet 104 activates physical memory macros M2 and M3 in response to the read request from logical interface CE_L1. Signal cs for Macro M2 is asserted. Signal we for Macro M2 is deasserted. Signal addr[8:0] for Macro M2 carries the value 0d211. Signal rdata[31:0] for Macro M2 carries the value 0x22222222. Signal cs for Macro M3 is asserted. Signal we for Macro M3 is deasserted. Signal addr[8:0] for Macro M3 carries the value 0d211. Signal rdata[31:0] for Macro M3 carries the remaining 16 bits of the value 0x2222xxxx. Because logical interface CE_L1 has a width of 48 bits, the memory-side memory controller 206 retrieves 48 bits total by combining data from physical memory macros M2 and M3.

In cycle 6, the memory-side memory controller 206 in memory chiplet 104 activates physical memory macro M4 in response to the read request from logical interface CE_L2. Signal cs for Macro M4 is asserted. Signal we for Macro M4 is deasserted. Signal addr[8:0] for Macro M4 carries the value 0d211. Physical memory macro M4 outputs the data previously stored at address 0d211. Signal rdata[31:0] for Macro M4 carries the value 0x3333xxxx. Because logical interface CE_L2 has a width of 16 bits, the memory-side memory controller 206 retrieves 16 bits from physical memory macro M4.

In cycle 5, the read data for logical interface CE_L0 is transmitted back through physical interface 108. Signal TSV_20_0 is asserted to indicate that a read response is being transmitted. The 24-bit read data is carried on additional TSV signals not shown in the diagram.

In cycle 6, the read response for logical interface CE_L0 arrives at compute to memory controller interface 1102. On logical interface CE_L0, signal resp_valid is asserted to indicate that valid read data is available. Signal rdata[23:0] carries the value 0x111111, matching the data that was previously written to logical address 0d211 of logical interface CE_L0.

In cycle 6, the read data for logical interface CE_L1 is transmitted back through physical interface 108. Signal TSV_20_0 is asserted. The 48-bit read data, assembled from the outputs of physical memory macros M2 and M3, is carried on additional TSV signals.

In cycle 7, the read response for logical interface CE_L1 arrives at compute to memory controller interface 1102. On logical interface CE_L1, signal resp_valid is asserted. Signal rdata[47:0] carries the value 0x222222222222, matching the data that was previously written to logical address 0d211 of logical interface CE_L1.

In cycle 7, the read data for logical interface CE_L2 is transmitted back through physical interface 108. Signal TSV_20_0 is asserted. The 16-bit read data is carried on additional TSV signals.

In cycle 8, the read response for logical interface CE_L2 arrives at compute to memory controller interface 1102. On logical interface CE_L2, signal resp_valid is asserted. Signal rdata[15:0] carries the value 0x3333, matching the data that was previously written to logical address 0d211 of logical interface CE_L2.

### Additional Variations

A computer program may comprise instructions which, when executed by a computer, cause the computer to carry out the method of establishing logical memory macros or the method of accessing memory through logical memory macro addresses. The computer program may be stored on a computer-readable medium. The computer-readable medium may be a non-transitory medium, such as read-only memory, flash memory, or other persistent storage. The instructions enable a computer to implement the memory controller functions described, including receiving requests for logical memory macros, defining logical memory macros by mapping them to physical memory macros 202, translating logical addresses to physical addresses, and coordinating access to physical memory macros 202.

A chiplet may be an integrated circuit (IC) die that implements a subset of the functionality of a larger semiconductor device and is designed to operate in conjunction with one or more other chiplets within a common package or assembly. A chiplet typically comprises a self-contained functional block, such as processing cores, memory, input/output interfaces, or specialized accelerators, and includes interconnect structures configured to enable high-speed communication with other chiplets.

For the purposes of this disclosure, a chiplet may be fabricated using the same or different semiconductor process technology as other chiplets in the assembly. Furthermore, a chiplet may include any combination of logic, memory, analog, or mixed-signal circuitry. A chiplet may be interconnected using any suitable packaging technology, including but not limited to 2D, 2.5D, or 3D integration, through electrical, optical, or other signal transmission means. Chiplets may operate independently or in coordination with other chiplets to provide the overall functionality of a system-on-chip or multi-chip module.

A memory macro may be a pre-designed and reusable circuit block that implements a defined memory function within an integrated circuit. A memory macro typically comprises an array of memory cells arranged to store digital data, along with associated peripheral circuitry for addressing, reading, writing, and refreshing the memory cells. For the purposes of this definition, a memory macro may implement any memory architecture, including but not limited to static random-access memory (SRAM), dynamic random-access memory (DRAM), read-only memory (ROM), or non-volatile memory types. Furthermore, a memory macro may include supporting components such as sense amplifiers, word-line and bit-line drivers, decoders, and timing control logic. A memory macro may be fabricated using any suitable semiconductor process technology and may be optimized for area, speed, power consumption, or other design constraints.

## Claims

1. A system, comprising:
a compute chiplet;
one or more memory chiplets, each comprising:
a plurality of physical memory macros, each comprising a plurality of memory cells and having a physical width and a physical depth; and
a bus, coupled to each of the plurality of physical memory macros; and
a physical interface, configured to couple the one or more memory chiplets to the compute chiplet; and
a memory controller, configured to:
define one or more logical memory macros, each having a logical width and a logical depth which may be different to the physical width or the physical depth of the physical memory macros, and each logical memory macro including memory cells from one or more physical memory macros; and
control access to the one or more logical memory macros by the compute chiplet.

2. A system according to any preceding claim, wherein the memory controller is further configured to:
receive a request from the compute chiplet for one or more memory macros each having a width and a depth;
define the one or more logical memory macros in response to the request, the one or more logical memory macros having a logical width and a logical depth corresponding to the requested width and depth.

3. A system according to any preceding claim, wherein the memory controller is further configured to:
receive a write/read request from the compute chiplet, the write/read request including a logical memory macro address;
translate the logical memory macro address into one or more physical memory macro addresses; and
write/read data to the one or more physical memory macro addresses.

4. A system according to any preceding claim, wherein the memory controller comprises a compute-side memory controller, located in the compute chiplet, and wherein the compute-side memory controller is configured to define and control access to the one or more logical memory macros.

5. A system according to claim 4, wherein the memory controller further comprises a memory-side memory controller, located in the one or more memory chiplets, and the memory-side memory controller is configured to translate logical memory macro address into one or more physical memory macro addresses during a write/read request; and optionally wherein the compute-side memory controller and the memory-side memory controller are further configured to communicate via the physical interface.

6. A system according to any preceding claim, wherein the one or more memory chiplets are planar and each have an upper side and a lower side, wherein the physical interface includes connections on the upper side and on the lower side of the one or more memory chiplets.

7. A system according to any preceding claim, wherein the compute chiplet and the one or more memory chiplets are stacked vertically.

8. A system according to claim 8, wherein the physical interface each comprises a first set of connectors in the compute chiplet and a second set of connectors in the one or more memory chiplets, and a layout of the first and second sets of connectors is the same; and optionally wherein the first and second sets of connectors each comprise a plurality of through silicon vias, TSVs.

9. A memory chiplet, comprising:
a plurality of physical memory macros, each comprising a plurality of memory cells and having a physical width and a physical depth;
a physical interface configured to allow the memory chiplet to physically couple to and communicate with a compute chiplet; and
a bus, coupled to each of the plurality of physical memory macros;
wherein the plurality of physical memory macros may be reconfigured into one or more logical memory macros, each logical memory macro having a logical width and a logical depth which may be different to the physical width or the physical depth of the physical memory macros, and each logical memory macro including memory cells from one or more physical memory macros.

10. A compute chiplet, comprising:
one or more compute processor cores;
a physical interface for coupling the compute chiplet to a memory chiplet; and
a compute-side memory controller, configured to:
control access to the memory chiplet, the memory chiplet having a plurality of physical memory macros each comprising a plurality of memory cells and having a physical width and a physical depth; and
define one or more logical memory macros, each having a logical width and a logical depth which may be different to the physical width or the physical depth of the physical memory macros, and each logical memory macro including memory cells from one or more physical memory macros.

11. A memory controller for a chiplet system, configured to:
control access to a memory chiplet by a compute chiplet, the memory chiplet having a plurality of physical memory macros each comprising a plurality of memory cells and having a physical width and a physical depth; and
define one or more logical memory macros, each having a logical width and a logical depth which may be different to the physical width or the physical depth of the physical memory macros, and each logical memory macro including memory cells from one or more physical memory macros.

12. A method of establishing a logical memory macro in a memory chiplet, the method comprising:
receiving, at a memory controller, a request from a compute chiplet for one or more memory macros, each having a width and a depth, in the memory chiplet;
wherein the memory chiplet comprises a plurality of physical memory macros, each comprising a plurality of memory cells and having a physical width and a physical depth;
the method further comprising:
defining, at the memory controller, one or more logical memory macros in response to the request, the one or more logical memory macros having a logical width and a logical depth corresponding to the requested width and depth;
wherein the logical width and logical depth may be different to the physical width or the physical depth of the physical memory macros, and each logical memory macro including memory cells from one or more physical memory macros.

13. A method of controlling access to a memory chiplet, comprising:
receiving, at a memory controller, a write/read request from a compute chiplet, the write/read request including a logical memory macro address;
translating, at the memory controller, the logical memory macro address into one or more physical memory macro addresses; and
write/read data to the one or more physical memory macro addresses in one or more physical memory macros in the memory chiplet.

14. A computer program comprising instructions which, when the program is executed by a computer, cause the computer to carry out the method of claims 12 or 13.

15. A computer-readable medium comprising instructions which, when executed by a computer, cause the computer to carry out the method of claim 12 or 13.
